# EUROPÄISCHE PATENTSCHRIFT

(11) **EP 0 807 153 B1**
(45) Veröffentlichungstag und Bekanntmachung des Hinweises auf die Patenterteilung: **28.03.2001**
(21) Anmeldenummer: 96901748.2
(22) Anmeldetag: 22.01.1996
(51) Int. Cl.: C09K 19/30, C09K 19/42, C09K 19/46

(54) **ELEKTROOPTISCHE FLÜSSIGKRISTALLANZEIGE**
ELECTRO-OPTIC LIQUID CRYSTAL DISPLAY
AFFICHAGE ELECTRO-OPTIQUE A CRISTAUX LIQUIDES

(30) Priorität: 03.02.1995 DE 19503507; 17.03.1995 DE 19509791; 01.08.1995 DE 19528104; 01.08.1995 DE 19528106; 01.08.1995 DE 19528107; 11.10.1995 DE 19537802
(43) Veröffentlichungstag der Anmeldung: 19.11.1997
(60) Teilanmeldung: 99124394.0
(73) Patentinhaber: MERCK PATENT GmbH, 64293 Darmstadt (DE)
(72) Erfinder: PAUSCH, Axel, D-64342 Seeheim (DE); POETSCH, Eike, D-64367 Mühltal (DE); TARUMI, Kazuaki, D-64342 Seeheim (DE); HUTH, Anja, D-64560 Riedstadt (DE); WÄCHTLER, Andreas, D-72076 Tübingen (DE); BEYER, Andreas, D-63452 Hanau (DE); SCHULER, Brigitte, D-63762 Grossostheim (DE); REIFFENRATH, Volker, D-64380 Rossdorf (DE); BREMER, Matthias, D-64295 Darmstadt (DE); KOMPTER, Michael, D-64560 Riedstadt (DE)
(86) Internationale Anmeldenummer: EP9600239
(87) Internationale Veröffentlichungsnummer: WO9623851

(56) Entgegenhaltungen:
- EP-A- 0 387 032
- EP-A- 0 447 565
- EP-A- 0 492 222
- EP-A- 0 502 406
- EP-A- 0 507 094
- EP-A- 0 656 412

## Beschreibung

Die Erfindung betrifft eine elektrooptische Flüssigkristallanzeige mit einer Umorientierungsschicht zur Umorientierung der Flüssigkristalle, deren Feld eine signifikante Komponente parallel zur Flüssigkristallschicht aufweist, enthaltend ein flüssigkristallines Medium mit positiver dielektrischer Anisotropie, wobei das Medium mindestens eine mesogene Verbindung enthält, welche eine 3,4,5-Trifluorphenylgruppe aufweist, und/oder mindestens eine mesogene Verbindung enthält, welche ein Strukturelement der Formel 2 autweist, 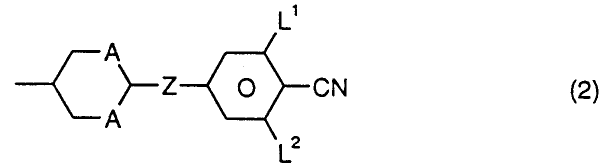 worin
- A: O oder CH,
- Z: -COO- oder eine Einfachbindung
- L¹: F, oder falls A O ist auch H, und
- L²: H oder F
bedeuten.

In herkömmlichen Flüssigkristallanzeigen (TN, STN, OMI, AMD-TN) werden die elektrischen Felder zur Umorientierung im wesentlichen senkrecht zur Flüssigkristallschicht erzeugt.

In der internationalen Patentanmeldung WO 91/10936 wird eine Flüssigkristallanzeige offenbart, in der die elektrischen Signale so erzeugt werden, daß die elektrischen Felder eine signifikante Komponente parallel zur Flüssigkristallschicht aufweisen (IPS, In-Plane-Switching). Die Prinzipien, solch eine Anzeige zu betreiben, werden z.B. beschrieben von R.A. Soref in Journal of Applied Physics, Vol. 45, Nr. 12, S. 5466-5468 (1974).

In der EP 0 588 568 werden verschiedene Möglichkeiten zum Ansteuern solch einer Anzeige offenbart.

Diese IPS-Anzeigen können mit flüssigkristallinen Materialien entweder mit einer positiven oder mit einer negativen Dielektrizitätsanisotropie (Δε ≠ 0) betrieben werden. Mit den bisher bekannten Materialien werden in IPS-Anzeigen jedoch relativ hohe Schwellspannungen und lange Schaltzeiten erzielt. Es bestand daher die Aufgabe, flüssigkristalline Materialien aufzuzeigen die geeignet sind, bei IPS-Anzeigen relativ niedrige Schwellspannungen und kurze Schaltzeiten zu erzielen.

Diese Aufgabe wurde überraschenderweise gelöst durch Einsatz von flüssigkristallinen Materialien, welche mindestens eine Verbindung enthalten, die eine 3, 4, 5-Trifluorphenylgruppe aufweist, und/oder mindestens eine mesogene Verbindung enthält, welche ein Strukturelement der Formel 2 autweist, 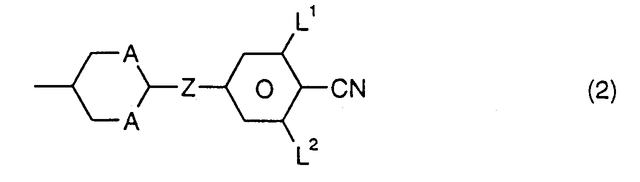 worin
- A: O oder CH,
- z: -COO- oder eine Einfachbindung
- L¹: F, oder falls A O ist auch H, und
- L²: H oder F
bedeuten.

Solche Verbindungen sind z.B. bekannt aus der EP 0 387 032 und der WO 91/03450.

Es gibt darin jedoch keinen Hinweis, daß man mit Hilfe dieser Substanzen die Schwellspannungen und die Schaltzeiten von IPS-Anzeigen verbessern kann.

Gegenstand der Erfindung ist somit eine elektrooptische Flüssigkristallanzeige mit einer Umorientierungsschicht zur Umorientierung der Flüssigkristalle, deren Feld eine signifikante Komponente parallel zur Flüssigkristallschicht aufweist, enthaltend ein flüssigkristallines Medium mit positiver dielektrischer Anisotropie, wobei das Medium mindestens eine mesogene Verbindung enthält, welche eine 3,4,5-Trifluorphenylgruppe aufweist, und/oder mindestens eine mesogene Verbindung enthält, welche ein Strukturelement der Formel 2 aufweist, 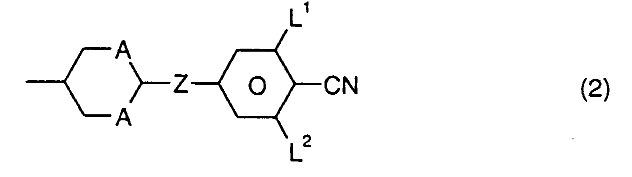 worin
- A: O oder CH,
- z: -COO- oder eine Einfachbindung
- L¹: F, oder falls A O ist auch H, und
- L²: H oder F
bedeuten.

Bevorzugte Ausführungsformen sind IPS-Anzeigen, wobei
a) das Medium mindestens eine Verbindung der Formel 1 enthält; 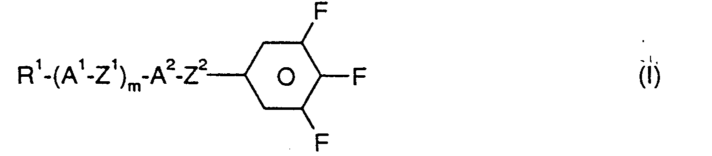 worin
   - R¹: H, einen unsubstituierten, einen einfach durch CN oder CF₃ oder einen mindestens einfach durch Halogen substituierten Alkyl- oder Alkenylrest mit 1 bis 15 C-Atomen, wobei in diesen Resten auch eine oder mehrere CH₂-Gruppen jeweils unabhängig voneinander durch -O-, -S-, 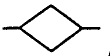 ,-CO-, -CO-O-, -O-CO- oder -O-CO-O- so ersetzt sein können, daß O-Atome nicht direkt miteinander verknüpft sind,
   - A¹ und A²: jeweils unabhängig voneinander einen

   (a) trans-1,4-Cyclohexylenrest oder 1 ,4-Cyclohexenylenrest, worin auch eine oder mehrere nicht benachbarte CH₂-Gruppen durch -O- und/oder -S-ersetzt sein können,
   (b) 1,4-Phenylenrest, worin auch eine oder zwei CH-Gruppen durch N ersetzt sein können,
   (c) Rest aus der Gruppe 1,4-Bicyclo(2,2,2)-octylen, Piperidin-1,4-diyl, Naphthalin-2,6-diyl, Decahydronaphthalin-2,6-diyl und 1,2,3,4-Tetrahydronaphthalin-2,6-diyl, wobei die Reste (a) und (b) durch ein oder zwei Fluor substituiert sein können,

   - Z¹ und Z²: jeweils unabhängig voneinander -CO-O-, -O-CO-, -CH₂O-, -OCH₂-, -CH₂CH₂-, -CH=CH-, -C≡C- oder eine Einfachbindung, einer der Reste Z¹ und Z² auch -(CH₂)₄- oder -CH=CH-CH₂CH₂-, und
   - m: 0, 1 oder 2
   bedeutet;
b) das Medium mindestens eine Verbindung enthält, welche eine Gruppe der Formel 3 aufweist: 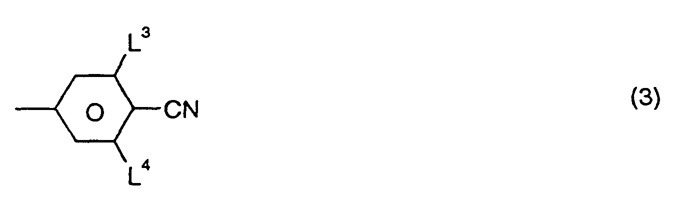 worin
   - L³ und L⁴: jeweils H oder F
   bedeuten, insbesondere wobei das Medium mindestens eine Verbindung der Formel II enthält 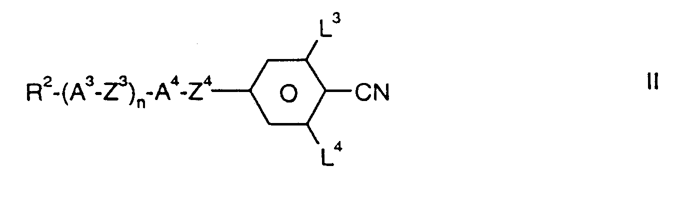 worin
   - L³ und L⁴: die angegebene Bedeutung aufweisen, insbesondere worin L³ F und L⁴ H oder F bedeutet,
   - R²: die für R¹ angegebene Bedeutung aufweist,
   - A³ und A⁴: jeweils unabhängig die für A¹ und A² angegebene Bedeutung besitzen,
   - Z³ und Z⁴: jeweils unabhängig voneinander die für Z¹ und Z² angegebene Bedeutung aufweisen, und
   - n: 0, 1 oder 2, vorzugsweise 0 ist;
c) das Medium eine dielektrische Anisotropie Δε > 8,5 aufweist, vorzugsweise zwischen 8, 6 und 14, insbesondere zwischen 8,7 und 13,5;
d) das Medium mindestens eine Verbindung, ausgewählt aus den Formeln lla bis llc, enthält 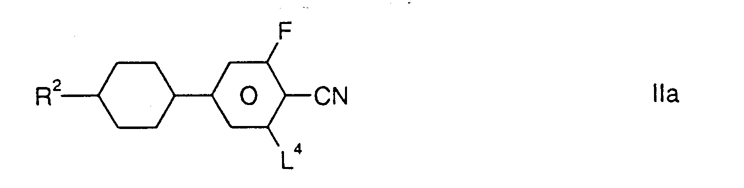 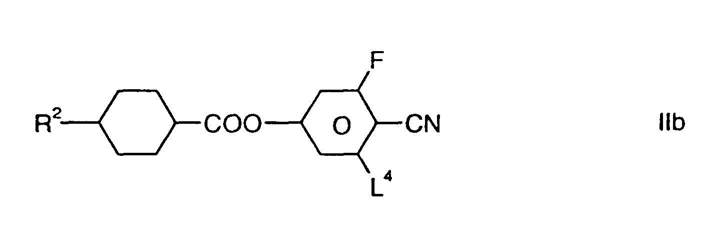 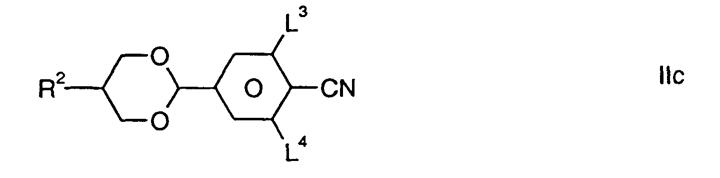 worin jeweils R², L³ und L⁴ die angegebene Bedeutung besitzen;
e) das Medium mindestens eine Verbindung der Formel III enthält,

   R³-(A⁵-Z⁵)ₒ-A⁶-R⁴ III

   worin
   - R³und R⁴: jeweils unabhängig voneinander die für R¹ angegebene Bedeutung besitzen,
   - A⁵ und A⁶,: jeweils unabhängig die für A¹ und A² angegebene Bedeutung besitzen,
   - Z⁵: jeweils unabhängig voneinander die für Z¹ und Z² angegebene Bedeutung aufweist, und
   - o: 1, 2 oder 3 ist;
f) das Medium mindestens eine Verbindung der Formel IV enthält 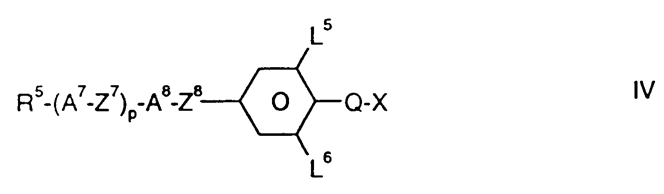 worin
   - R⁵: die für R¹ angegebene Bedeutung aufweist,
   - A⁷ und A⁸: jeweils unabhängig voneinander die für A¹ und A² angegebene Bedeutung besitzen,
   - Z⁷ und Z⁸: jeweils unabhängig voneinander die für Z¹ und Z² angegebene Bedeutung besitzen,
   - L⁵ und L⁶: jeweils unabhängig voneinander H oder F,
   - Q: einen Polyfluoralkylenrest der Formel

   -(O)_{q}-(CH₂)ᵣ(CF₂)ₛ-

   worin
   q 0 oder 1 ist
   r 0, oder eine ganze Zahl zwischen 1 und 6 ist und
   s eine ganze Zahl zwischen 1 und 6 ist,
   - X: H, F oder Cl, und
   - p: 0, 1 oder 2 bedeuten.

Weiterhin bevorzugt ist eine IPS-Anzeige, wobei die Bildelemente mittels Aktivmatrix angesteuert werden.

Ein weiterer Gegenstand der Erfindung ist ein flüssigkristallines Medium mit positiver dielektrischer Anisotropie, welches mindestens eine Verbindung mit einer 3,4,5-Trifluorphenylgruppe, vorzugsweise einer Verbindung der Formel I, und mindestens eine Verbindung mit einer Gruppe der Formel (3) enthält, vorzugsweise einer Gruppe der Formel (2), insbesondere eine Verbindungder Formel II, insbesondere welches
- 10 bis 60, vorzugsweise 15 bis 40 Gew.% mindestens einer Verbindung der Formel I,
- 15 bis 40, vorzugsweise 20 bis 35 Gew.% mindestens einer Verbindung der Formel II,
- 20 bis 55, vorzugsweise 25 bis 50 Gew.% mindestens einer Verbindung der Formel III, und
- 0 bis 30, vorzugsweise 20 bis 25 Gew.% einer Verbindung der Formel IV,
enthält.

Vorzugsweise enthält das erfindungsgemäße flüssigkristalline Medium:
- mindestens eine Verbindung ausgewählt aus den Formeln Ia und Ib enthält 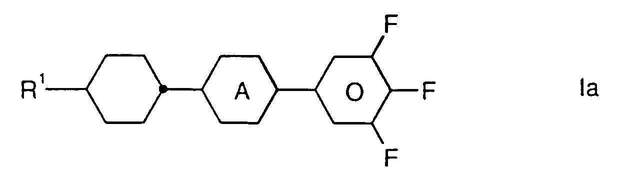 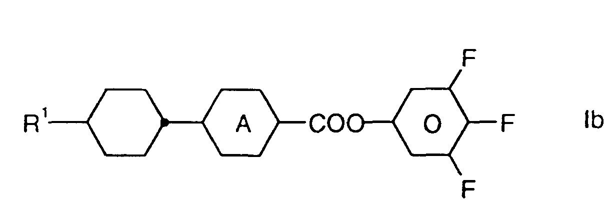
- mindestens eine Verbindung, ausgewählt aus den Formeln II1, II2, II3 und II4 enthält, 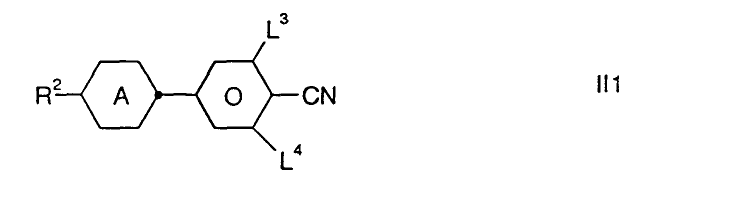 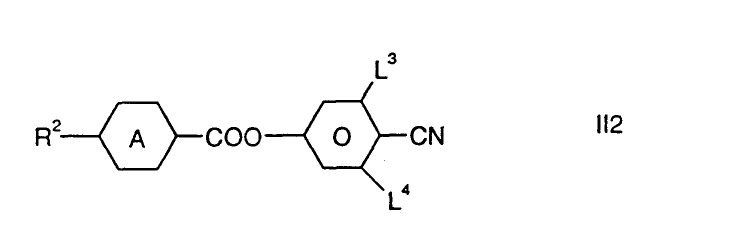 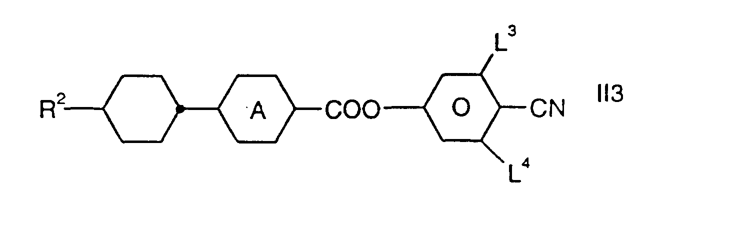 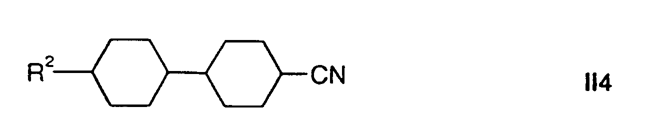
- mindestens eine Verbindung ausgewählt aus den Formeln IIIa, IIIb und IIIc, 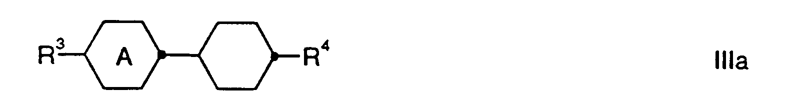 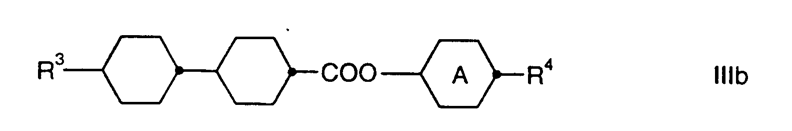 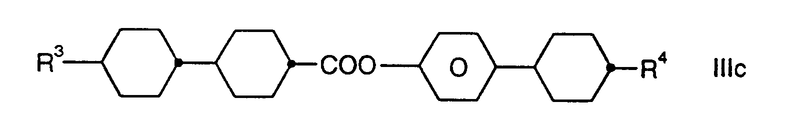 sowie
- gegebenenfalls mindestens eine Verbindung ausgewählt aus den Formeln IVa und IVb, 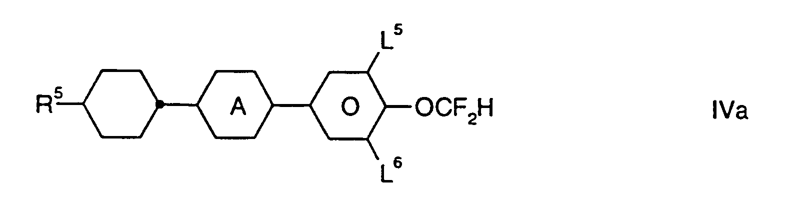 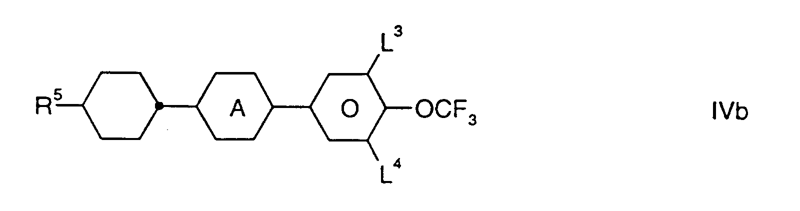 worin 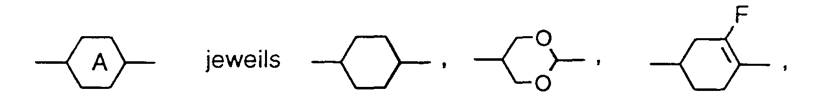 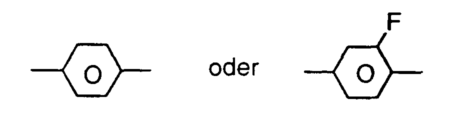 bedeutet, und R¹, R², R³, R⁴, R⁵, L¹, L², L³ und L⁴ die jeweils angegebene Bedeutung besitzen.

In einer besonders bevorzugten Ausführungsform enthalten die erfindungsgemäßen Medien mindestens eine Verbindung der Formel la, worin 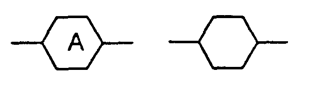 bedeutet, und mindestens eine Verbindung der Formel la, worin 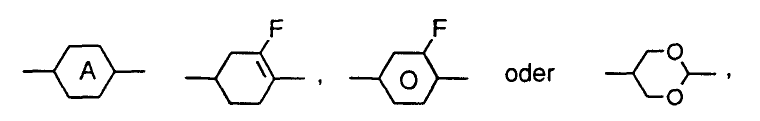 bedeutet.

In einer weiteren bevorzugten Ausführungsform enthalten die erfindungsgemäßen Medien mindestens eine Verbindung der Formel la und mindestens eine Verbindung der Formel Ib.

Weiterhin bevorzugt sind Medien enthaltend mindestens eine Verbindung der Formel IIa, worin
- L³: F und L⁴ H oder F ist und 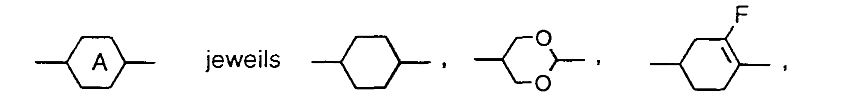 steht; bzw. solche Verbindungen der Formel lla, worin
- L³ und L⁴: für H oder F stehen und 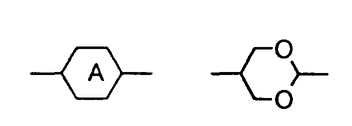 bedeutet.

Besonders bevorzugt enthalten die erfindungsgemäßen Medien eine Verbindung der Formel llb, worin 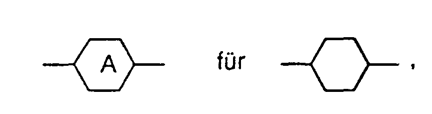 steht und L³ F bedeutet.

Die erfindungsgemäßen flüssigkristallinen Medien weisen in der Regel eine Doppelbrechung (Δn) < 0,12 auf, vorzugsweise ist Δn zwischen 0,07 und 0,1, insbesondere zwischen 0,08 und 0,09.

Die Viskosität (bei 20 °C) der erfindungsgemäßen Materialien ist in der Regel kleiner als 30 mm² s⁻¹, insbesondere zwischen 15 und 25 mm² s⁻¹. Der spezifische Widerstand der erfindungsgemäßen Materialien ist in der Regel bei 20 °C zwischen 5 x 10¹⁰ und 5 x 10¹³ Ω· cm, besonders bevorzugt liegen die Werte zwischen 5 x 10¹¹ und 5 x 10¹² Ω· cm.

Es wurde gefunden, daß bereits ein relativ geringer Anteil an Verbindungen der Formel I im Gemisch mit üblichen Flüssigkristallmaterialien, insbesondere jedoch mit einer oder mehreren Verbindungen der Formel II, III und/oder IV zu einer beträchtlichen Erniedrigung der Schwellspannung und zu schnellen Schaltzeiten führt, wobei gleichzeitig breite nematische Phasen mit tiefen Übergangstemperaturen smektisch-nematisch beobachtet werden. Die Verbindungen der Formeln I bis IV sind farblos, stabil und untereinander und mit anderen Flüssigkristallmaterialien gut mischbar.

Der Ausdruck "Alkyl" umfaßt geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppe mit 2-5 Kohlenstoffatomen sind im allgemeinen bevorzugt.

Der Ausdruck "Alkenyl" umfaßt geradkettige und verzweigte Alkenylgruppen mit 2-7 Kohlenstoffatomen, insbesondere die geradkettigen Gruppen. Besonders Alkenylgruppen sind C₂-C₇-1 E-Alkenyl, C₄-C₇-3E-Alkenyl, C₅₋C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇-4-Alkenyl. Beispiele bevorzugter Alkenylgruppen sind Vinyl, 1E-Propenyl, 1E-Butenyl, 1 E-Pentenyl, 1 E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfaßt vorzugsweise geradkettige Gruppen mit endständigen Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" umfaßt vorzugsweise geradkettige Reste der Formel CₙH₂ₙ₊₁-O-(CH₂)ₘ, worin n und m jeweils unabhängig voneinander 1 bis 6 bedeuten. Vorzugsweise ist n = 1 und m 1 bis 6.

Durch geeignete Wahl der Bedeutungen von R¹ und R⁵ können die Ansprechzeiten, die Schwellenspannung, die Steilheit der Transmissionskennlinien etc. in gewünschter Weise modifiziert werden. Beispielsweise führen 1E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten.

Eine Gruppe -CH₂CH₂- in Z¹ bzw. Z² führt im allgemeinen zu höheren Werte von k₃₃/k₁₁ im Vergleich zu einer einfachen Kovalenzbindung. Höhere Werte von k₃₃/k₁₁ ermöglichen z.B. flachere Transmissionskennlinien in TN-Zellen mit 90° Verdrillung (zur Erzielung von Grautönen) und steilere Transmissionskennlinien in STN-, SBE- und OMI-Zellen (höhere Multiplexierbarkeit) und umgekehrt.

Das optimale Mengenverhältnis der Verbindungen der Formeln I und II + III + IV hängt weitgehend von den gewünschten Eigenschaften, von der Wahl der Komponenten der Formeln I, II, III und/oder IV und Von der Wahl weiterer gegebenenfalls vorhandener Komponenten ab. Geeignete Mengenverhältnisse innerhalb des oben angegebenen Bereichs können von Fall zu Fall leicht ermittelt werden.

Die Gesamtmenge an Verbindungen der Formeln I bis IV in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formeln I und II ist.

In einer besonders bevorzugten Ausführungsform enthalten die erfindungsgemäßen Medien Verbindungen der Formel IV (vorzugsweise II und/oder III), worin Q-X OCF₃ oder OCHF₂ bedeutet. Eine günstige synergistische Wirkung mit den Verbindungen der Formel I führt zu besonders vorteilhaften Eigenschaften.

Die erfindungsgemäßen flüssigkristallinen Medien enthalten vorzugsweise neben einer oder mehreren Verbindungen der Formeln I, II, III und IV als weitere Bestandteile 2 bis 40, insbesondere 4 bis 30 Komponenten. Ganz besonders bevorzugt enthalten diese Medien neben einer oder mehreren erfindungsgemäßen Verbindungen 7 bis 25 Komponenten. Diese weiteren Bestandteile werden vorzugsweise ausgewählt aus nematischen oder nematogenen (monotropen oder isotropen) Substanzen, insbesondere Substanzen aus den Klassen der Azoxybenzole, Benzylidenaniline, Biphenyle, Terphenyle, Phenyl- oder Cyclohexylbenzoate, Cyclohexancarbonsäurephenyl- oder cyclohexyl-ester, Phenyl- oder Cyclohexyl-ester der Cyclohexylbenzoesäure, Phenyl- oder Cyclohexyl-ester der Cyclohexylcyclohexancarbonsäure, Cyclohexyl-phenylester der Benzoesäure, der Cyclohexancarbonsäure, bzw. der Cyclohexylcyclohexancarbonsäure, Phenylcyclohexane, Cyclohexylbiphenyle, Phenylcyclohexylcyclohexane, Cyclohexylcyclohexane, Cyclohexylcyclohexylcyclohexene, 1,4-Bis-cyclohexylbenzole, 4,4'-Bis-cyclo-hexylbiphenyle, Phenyl- oder Cyclohexylpyrimidine, Phenyl-oder Cyclohexylpyridine, Phenyl- oder Cyclohexyldioxane, Phenyl- oder Cyclohexyl-1,3-dithiane, 1,2-Diphenylethane, 1,2-Dicyclohexylethane, 1-Phenyl-2-cyclohexylethane, 1-Cyclohexyl-2-(4-phenyl-cyclohexyl)-ethane, 1-Cyclohexyl-2-biphenylylethane, 1-Phenyl-2-cyclohexyl-phenylethane, gegebenenfalls halogenierten Stilbene, Benzylphenylether, Tolane und substituierten Zimtsäuren. Die 1,4-Phenylengruppen in diesen Verbindungen können auch fluoriert sein.

Die wichtigsten als weitere Bestandteile erfindungsgemäßer Medien in Frage kommenden Verbindungen lassen sich durch die Formeln 1, 2, 3, 4 und 5 charakterisieren:

| | |
|---|---|
| R'-L-E-R" | 1 |
| R'-L-COO-E-R" | 2 |
| R'-L-OOC-E-R" | 3 |
| R'-L-CH₂CH₂-E-R" | 4 |
| R'-L-C≡C-E-R" | 5 |

In den Formeln 1, 2, 3, 4 und 5 bedeuten L und E, die gleich oder verschieden sein können, jeweils unabhängig voneinander einen bivalenten Rest aus der aus -Phe-, -Cyc-, -Phe-Phe-, -Phe-Cyc-, -Cyc-Cyc-, -Pyr-, -Dio-, -G-Phe- und -G-Cyc- sowie deren Spiegelbilder gebildeten Gruppe, wobei Phe unsubstituiertes oder durch Fluor substituiertes 1,4-Phenylen, Cyc trans-1,4-Cyclohexylen, Pyr Pyrimidin-2,5-diyl oder Pyridin-2,5-diyl, Dio 1,3-Dioxan-2,5-diyl und G 2-(trans-1,4-Cyclohexyl)-ethyl, Pyrimidin-2,5-diyl, Pyridin-2,5-diyl oder 1,3-Dioxan-2,5-diyl bedeuten.

Vorzugsweise ist einer der Reste L und E Cyc, Phe oder Pyr. E ist vorzugsweise Cyc, Phe oder Phe-Cyc. Vorzugsweise enthalten die erfindungsgemäßen Medien eine oder mehrere Komponenten ausgewählt aus den Verbindungen der Formeln 1, 2, 3, 4 und 5, worin L und E ausgewählt sind aus der Gruppe Cyc, Phe und Pyr und gleichzeitig eine oder mehrere Komponenten ausgewählt aus den Verbindungen der Formeln 1, 2, 3, 4 und 5, worin einer der Reste L und E ausgewählt ist aus der Gruppe Cyc, Phe und Pyr und der andere Rest ausgewählt ist aus der Gruppe -Phe-Phe-, -Phe-Cyc-, -Cyc-Cyc-, -G-Phe- und -G-Cyc-, und gegebenenfalls eine oder mehrere Komponenten ausgewählt aus den Verbindungen der Formeln 1, 2, 3, 4 und 5, worin die Reste L und E ausgewählt sind aus der Gruppe -Phe-Cyc-, -Cyc-Cyc-, -G-Phe- und -G-Cyc-.

R' und R" bedeuten in einer kleineren Untergruppe der Verbindungen der Formeln 1, 2, 3, 4 und 5 jeweils unabhängig voneinander Alkyl, Alkenyl, Alkoxy, Alkoxyalkyl, Alkenyloxy oder Alkanoyloxy mit bis zu 8 Kohlenstoffatomen. Im folgenden wird diese kleinere Untergruppe Gruppe A genannt und die Verbindungen werden mit den Teilformeln 1a, 2a, 3a, 4a und 5a bezeichnet. Bei den meisten dieser Verbindungen sind R' und R" voneinander verschieden, wobei einer dieser Reste meist Alkyl, Alkenyl, Alkoxy oder Alkoxyalkyl ist.

In einer anderen als Gruppe B bezeichneten kleineren Untergruppe der Verbindungen der Formeln 1, 2, 3, 4 und 5 bedeutet R" -F, -Cl, -NCS oder -(O)ᵢ CH₃₋₍ₖ₊₁₎ FₖCl₁, wobei i 0 oder 1 und k+1 1, 2 oder 3 sind; die Verbindungen, in denen R" diese Bedeutung hat, werden mit den Teilformeln 1 b, 2b, 3b, 4b und 5b bezeichnet. Besonders bevorzugt sind solche Verbindungen der Teilformeln 1b, 2b, 3b, 4b und 5b, in denen R" die Bedeutung -F, -Cl, -NCS, -CF₃, -OCHF₂ oder -OCF₃ hat.

In den Verbindungen der Teilformeln 1b, 2b, 3b, 4b und 5b hat R' die bei den Verbindungen der Teilformeln 1 a-5a angegebene Bedeutung und ist vorzugsweise Alkyl, Alkenyl, Alkoxy oder Alkoxyalkyl.

In einer weiteren kleineren Untergruppe der Verbindungen der Formeln 1, 2, 3, 4 und 5 bedeutet R" -CN; diese Untergruppe wird im folgenden als Gruppe C bezeichnet und die Verbindungen dieser Untergruppe werden entsprechend mit Teilformeln 1c, 2c, 3c, 4c und 5 c beschrieben. In den Verbindungen der Teilformeln 1c, 2c, 3c, 4c und 5c hat R' die bei den Verbindungen der Teilformeln 1 a-5a angegebene Bedeutung und ist vorzugsweise Alkyl, Alkoxy oder Alkenyl.

Neben den bevorzugten Verbindungen der Gruppen A, B und C sind auch andere Verbindungen der Formeln 1, 2, 3, 4 und 5 mit anderen Varianten der vorgesehenen Substituenten gebräuchlich. All diese Substanzen sind nach literaturbekannten Methoden oder in Analogie dazu erhältlich.

Die erfindungsgemäßen Medien enthalten neben erfindungsgemäßen Verbindungen der Formel I vorzugsweise eine oder mehrere Verbindungen, welche ausgewählt werden aus der Gruppe A und/oder Gruppe B und/oder Gruppe C. Die Massenanteile der Verbindungen aus diesen Gruppen an den erfindungsgemäßen Medien sind vorzugsweise

| | |
|---|---|
| Gruppe A | 0 bis 90 %, vorzugsweise 20 bis 90 %, insbesondere 30 bis 90 % |
| Gruppe B | 0 bis 80 %, vorzugsweise 10 bis 80 %, insbesondere 10 bis 65 % |
| Gruppe C | 0 bis 80 %, vorzugsweise 5 bis 80 %, insbesondere 5 bis 50 % |

wobei die Summe der Massenanteile der in den jeweiligen erfindungsgemäßen Medien enthaltenen Verbindungen aus den Gruppen A und/oder B und/oder C vorzugsweise 5 % bis 90 % und insbesondere 10 % bis 90 % beträgt.

Die erfindungsgemäßen Medien enthalten vorzugsweise 1 bis 40 %, insbesondere vorzugsweise 5 bis 30 % an erfindungsgemäßen Verbindungen. Weiterhin bevorzugt sind Medien, enthaltend mehr als 40 %, insbesondere 45 bis 90 % an erfindungsgemäßen Verbindungen. Die Medien enthalten vorzugsweise drei, vier oder fünf erfindungsgemäße Verbindungen.

Der Aufbau der erfindungsgemäßen IPS-Anzeige entspricht der für derartige Anzeigen üblichen Bauweise, wie z.B. beschrieben in der WO 91/10936 oder der EP 0 588 568. Dabei ist der Begriff der üblichen Bauweise hier weit gefaßt und umfaßt auch alle Abwandlungen und Modifikationen der IPS-Anzeige, insbesondere z.B. auch Matrix-Anzeigeelemente auf Basis poly-Si TFT oder MIM.

Ein wesentlicher Unterschied der erfindungsgemäßen Anzeigen zu den bisher üblichen besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe oder chirale Dotierstoffe zugesetzt werden.

C bedeutet eine kristalline, S eine smektische, S_{B} eine smektisch B, N eine nematische und I die isotrope Phase.

V₁₀ bezeichnet die Spannung für 10 % Transmission (Blickrichtung senkrecht zur Plattenoberfläche). tₒₙ bezeichnet die Einschaltzeit und t_{off} die Ausschaltzeit bei einer Betriebsspannung entsprechend dem 2,5fachen Wert von V₁₀. Δn bezeichnet die optische Anisotropie und n₀ den Brechungsindex (jeweils bei 589 nm). Δε bezeichnet die dielektrische Anisotropie (Δε = ε_{∥} -ε_{⊥}, wobei e_{∥} die Dielektrizitätskonstante parallel zu den Moleküllängsachsen und e_{⊥} die Dielektrizitätskonstante senkrecht dazu bedeutet. Die elektrooptischen Daten wurden in einer IPS-Zelle bei 20 °C gemessen, sofern nicht ausdrücklich etwas anderes angegeben wird. Die optischen Daten wurden bei 20 °C gemessen, sofern nicht ausdrücklich etwas anderes angegeben wird.

Es wurde eine IPS-Testzelle gemäß WO 91/10936 mit einer Kammstruktur eingesetzt, wobei die Elektroden und die Elektrodenzwischenräume eine Abstand von 20 um aufweisen.

Die Schichtdicke d des Flüssigkristallmaterials beträgt 5 um. Die Zelle weist ferner auf:

| | |
|---|---|
| Ausgangsverdrillungswinkel | 0° |
| Ausrichtungswinkel | 5° |
| Tilt-Anstellwinkel | 3° |

Die Zellen sind im "Aus" Zustand dunkel.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste CₙH₂ₙ₊₁ bzw.CₘH₂ₘ₊₁ sind geradkettige Alkylreste mit n bzw. m C-Atomen. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich ein Code für die Substituenten R¹, R², L¹ und L²:

| Code für R¹, R², L¹, L² | R¹ | R² | L¹ L² |
|---|---|---|---|
| nm | CₙH₂ₙ₊₁ | CₘH₂ₘ₊₁ | H H |
| nOm | CₙH₂ₙ₊₁ | OCₘH₂ₘ₊₁ | H H |
| nO.m | OCₙH₂ₙ₊₁ | CₘH₂ₘ₊₁ | H H |
| n | CₙH₂ₙ₊₁ | CN | H H |
| nN.F | CₙH₂ₙ₊₁ | CN | F H |
| nF | CₙH₂ₙ₊₁ | F | H H |
| nOF | OCₙH₂ₙ₊₁ | F | H H |
| nCl | CₙH₂ₙ₊₁ | Cl | H H |
| nF.F | CₙH₂ₙ₊₁ | F | F H |
| nN.F.F | CₙH₂ₙ₊₁ | CN | F F |
| nCF₃ | CₙH₂ₙ₊₁ | CF₃ | H H |
| nOCF₃ | CₙH₂ₙ₊₁ | OCF₃ | H H |
| nOCF₃ | CₙH₂ₙ₊₁ | OCF₃ | H H |
| nOCF₂ | CₙH₂ₙ₊₁ | OCHF₂ | H H |
| nS | CₙH₂ₙ₊₁ | NCS | H H |
| rVsN | CᵣH₂ᵣ₊₁-CH=CH-CₛH₂ₛ- | CN | H H |
| rEsN | CᵣH₂ᵣ₊₁-O-C₂H₂ₛ- | CN | H H |
| nAm | CₙH₂ₙ₊₁ | COOCₘH₂ₘ₊₁ | H H |
| nF.F.F | CₙH₂ₙ₊₁ | F | F F |
| nCl.F.F | CₙH₂ₙ₊₁ | Cl | F F |
| nCF₃.F.F | CₙH₂ₙ₊₁ | CF₃ | F F |
| nOCF₃.F.F | CₙH₂ₙ₊₁ | OCF₃ | F F |
| nOCF₂.F.F | CₙH₂ₙ₊₁ | OCHF₂ | F F |
| nOCF₃.F | CₙH₂ₙ₊₁ | OCF₃ | F H |

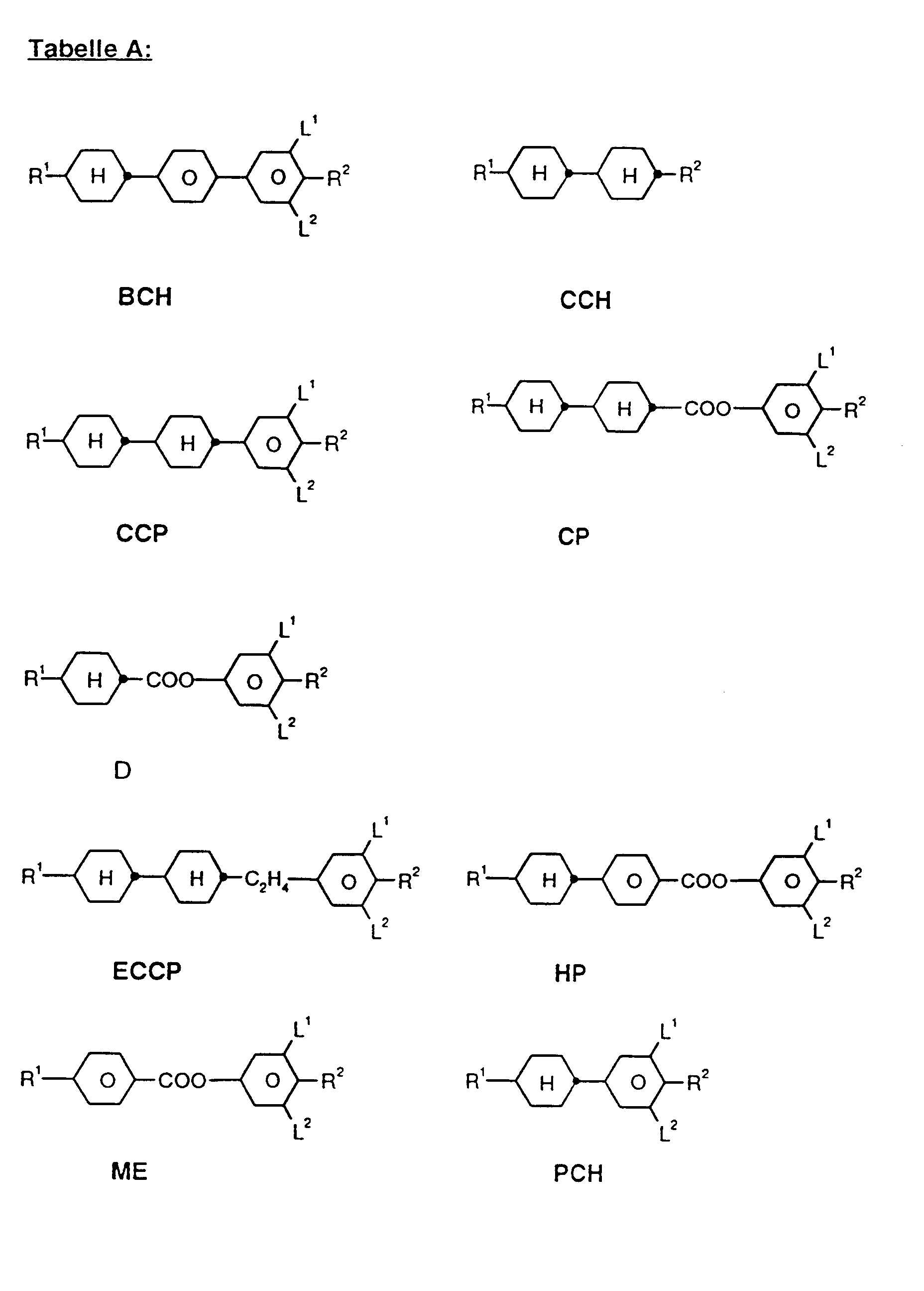

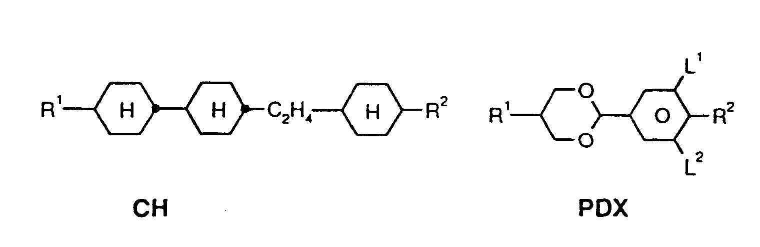

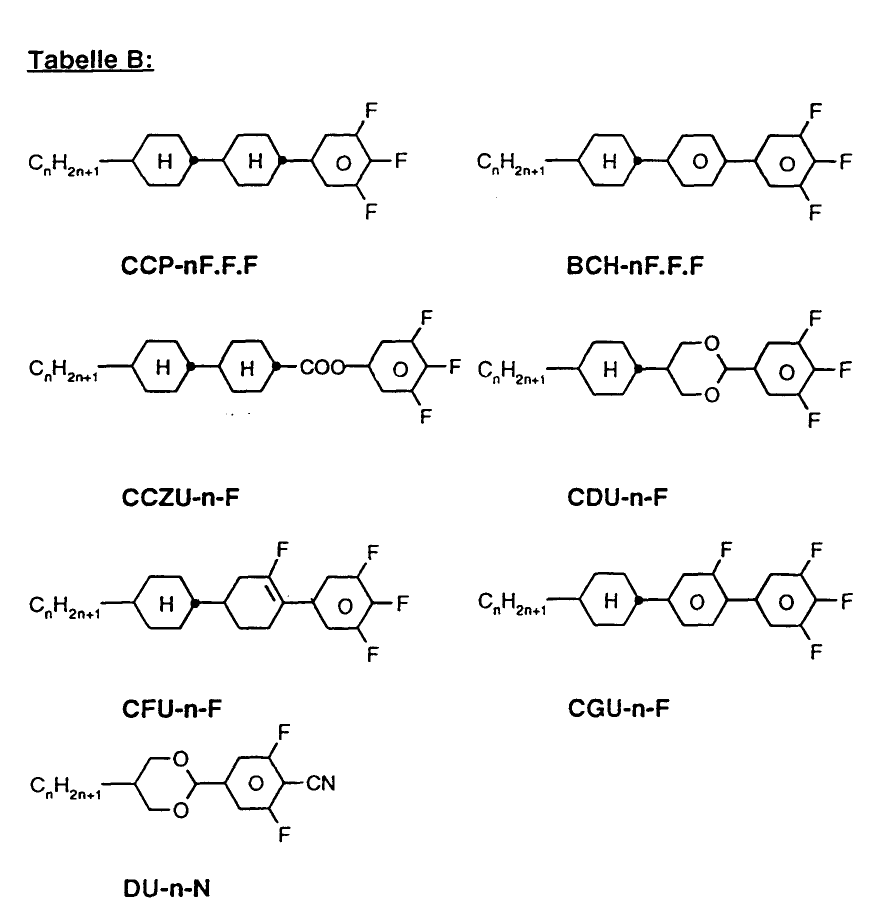

Auch ohne weitere Ausführungen wird davon ausgegangen, daß ein Fachmann die obige Beschreibung im weitesten Umfang nutzen kann. Die bevorzugten Ausführungsformen sind deswegen lediglich als beschreibende, keineswegs als in irgendeiner Weise limitierende Offenbarung aufzufassen.

Die vollständige Offenbarung aller vor- und nachstehend aufgeführten Anmeldungen, Patente und Veröffentlichungen, sowie der korrespondierenden Anmeldungen
P 195 03 507 vom 03.02.1995,
P 195 09 791 vom 17.03.1995,
P 195 28 104 vom 01.08.1995,
P 195 28 106 vom 01.08.1995,
P 195 28 107 vom 01.08.1995 und
P 195 37 802 vom 11.10.1995
sind durch Bezugnahme in diese Anmeldung eingeführt.

| | |
|---|---|
| CCP-3F.F.F | 9,00 |
| CCP-5F.F.F | 9,00 |
| CCH-34 | 11,00 |
| CCH-35 | 11,00 |
| CH-33 | 3,00 |
| CH-35 | 3,00 |
| CH-43 | 3,00 |
| CH-45 | 3,00 |

und weist einen hohen Kontrast und niedrige Schaltzeiten auf.

### Beispiel 2

Eine IPS-Anzeige enthält eine nematische Mischung mit

| | |
|---|---|
| Klärpunkt | +69 °C |
| Δn | 0,0811 |
| nₒ | 1,4766 |
| Δε | 13,2 |
| ε_{⊥} | 4,2 |
| S-N | < -30 °C |

bestehend aus

| | |
|---|---|
| ME2N.F | 4,00 |
| ME3N.F | 4,00 |
| ME5N.F | 10,00 |
| ME7N.F | 5,00 |
| CCH-2 | 12,00 |
| CCH-3 | 12,00 |
| CCH-4 | 12,00 |
| CCP-3F.F.F | 6,00 |
| CCP-5F.F.F | 6,00 |
| CH-33 | 5,00 |
| CH-35 | 5,00 |
| CH-43 | 5,00 |
| CCH-34 | 10,00 |
| CCH-303 | 4,00 |

und weist einen hohen Kontrast und niedrige Schaltzeiten auf.

### Beispiele 1 bis 3

Die folgenden Beispiel betreffen IPS-Anzeigen enthaltend nematische Mischungen mit CCZU-n-F

| Beispiel | 1 |
|---|---|
| Klärpunkt [°C] | +68 |
| Rot. visc. γ₁ [mPa·s]20°C | 108 |
| Spec. resistivity [Ω· cm] | 3.0e11 |
| (20 °C) | |
| Δn (589 nm, 20 °C) | +0.0758 |
| Δε ( 1 kHz, 20 °C) | +10.6 |
| V_{(10.0.20)} [V] | 0.87 |
| V_{(90.0.20)} [V] | |
| K₁ [10⁻¹²N] 20 °C | 7.2 |
| K₃ [10⁻¹² N] 20 °C | 14.4 |
| Composition [%]: | PCH-7F 9.00 |
| | CCP-2F.F.F 16.00 |
| | CCP-3F.F.F 13.00 |
| | CCP-5F.F.F 9.00 |
| | CCP-20CF3 16.00 |
| | CCP-30CF3 8.00 |
| | PDX-3 11.00 |
| | CCZU-3-F 10.00 |
| | CCZU-5-F 8.00 |

| Beispiel | 2 | | 3 | |
|---|---|---|---|---|
| Klärpunkt [°C] | | +76 | | +73 |
| Rot. visc.γ₁ [mPa· s] 20 °C | | 101 | | 105 |
| Spec. resistivty [Ω· cm] (20 °C) | | 4.4e11 | | 2.3E11 |
| Δn (589 nm, 20 °C) | | +0.0762 | | 0.0742 |
| Δε (1kHz, 20 °C) | | +9.7 | | |
| V(_{10.0.20)}[V] | | 1.06 | | 0.93 |
| V_{(90.0.20)} [V] | | - | | - |
| K₁[10⁻¹²N] 20°C | | 9.7 | | 8.2 |
| K₃ [10⁻¹²N] 20°C | | 15.4 | | 14.5 |
| Composition [%]: | CCP-2F.F.F | 12.00 | CCP-2F.F.F | 12.00 |
| | CCP-3F.F.F | 11.00 | CCP-3F.F.F | 9.00 |
| | CCP-5F.F.F | 8.00 | CCP-5F.F.F | 8.00 |
| | CCP-20CF3 | 10.00 | CCP-20CF3 | 5.00 |
| | CCP-30CF3 | 10.00 | CCP-30CF3 | 8.00 |
| | CCP-50CF3 | 10.00 | CCP-50CF3 | 5.00 |
| | PDX-3 | 11.00 | PDX-3 | 11.00 |
| | CCH-35 | 8.00 | CCH-35 | 8.00 |
| | PCH-7F | 7.00 | PCH-7F | 7.00 |
| | CCZU-2-F | 7.00 | CCZU-2-F | 7.00 |
| | CCZU-3-F | 6.00 | CCZU-3-F | 13.00 |
| | | | CCZU-5-F | 6.00 |

### Beispiel 4

Die folgenden Beispiel betreffen IPS-Anzeigen enthaltend nematische Mischungen mit CDU-n-F oder CGU-n-F

| Beispiel | 4 | |
|---|---|---|
| Klärpunkt [°C] | | +60 |
| Rot. visc, γ₁ [mPa·s]20°C | | 109 |
| Spec. resistivity [Ω· cm] (20 °C) | | - |
| Δn (589 nm, 20 °C) | | +0.0756 |
| Δε ( 1kHz, 20°C) | | +13.7 |
| V_{(10.0.20)} [V] | | 0.70 |
| K₁ [10⁻¹² N] 20 °C | | 6.0 |
| K₃ [10⁻² N] 20°C | | 14.5 |
| Composition [%]: | CCP-2F.F.F | 16.00 |
| | CCP-3F.F.F | 14.00 |
| | CCP-5F.F.F | 11.00 |
| | CCP-20CF3 | 17.00 |
| | CCP-30CF3 | 14.00 |
| | PDX-2N.F | 3.00 |
| | PDX-3N.F | 6.00 |
| | PDX-5N.F | 11.00 |
| | CDU-3-F | 8.00 |

### Biespiel 5

Eine IPS-Anzeige enthält eine nematische Mischung mit

| | |
|---|---|
| Klärpunkt | +68°C |
| Δn | 0,0789 |
| nₒ | 1,4725 |
| Δε | 12,7 |
| ε_{⊥} | 5,1 |
| Viskosität (20 °C) | 18 mm² s⁻¹ |
| K₁ [10⁻¹² N] (20 °C) | 7,4 |
| K₃ [10⁻¹² N] (20 °C) | 15,6 |

bestehend aus

| | |
|---|---|
| PCH-3 | 6,00 |
| CCP-20CF₂.F.F | 12,00 |
| CCP-2F.F.F | 17,00 |
| CCP-3F.F.F | 14,00 |
| CCP-5F.F.F | 13,00 |
| CCP-20CF₃ | 15,00 |
| CCP-30CF₃ | 13,00 |
| PDX-3N.F.F | 5,00 |
| PDX-5N.F.F | 5,00 |

und weist einen hohen Kontrast und niedrige Schaltzeiten auf.

### Beispiel 6

Eine IPS-Anzeige enthält eine nematische Mischung mit

| | |
|---|---|
| Klärpunkt | 75 |
| Δn | 0,0800 |
| nₒ | 1,4735 |
| Δε | 11,7 |
| ε_{⊥} | 4,8 |
| Viskosität (20 °C) bestehend aus | 24 mm² s⁻¹ |

| | |
|---|---|
| PCH-3 | 6,00 |
| CCP-20CF₂.F.F | 12,00 |
| CCP-2F.F.F | 17,00 |
| CCP-3F.F.F | 14,00 |
| CCP-5F.F.F | 13,00 |
| CCP-2OCF₃ | 15,00 |
| CCP-30CF3 | 13,00 |
| PDX-3N.F | 5,00 |
| PDX-5N.F | 5,00 |

und weist einen hohen Kontrast und niedrige Schaltzeiten auf.

### Beispiel 7

Eine IPS-Anzeige enthält eine nematische Mischung bestehend aus

| | |
|---|---|
| PCH-3 | 10,00 |
| PDX-3N.F | 14,00 |
| PDX-3N.F.F | 9,00 |
| CCP-30CF2.F.F | 11,00 |
| CCP-50CF2.F.F | 10,00 |
| CCP-3F.F.F | 11,00 |
| CCP-5F.F.F | 11,00 |
| CH-33 | 4,00 |
| CH-35 | 3,00 |
| CCH-501 | 7,00 |

und weist einen hohen Kontrast und niedrige Schaltzeiten auf.

### Beispiel 8

Eine IPS-Anzeige enthält eine nematische Mischung mit

| | | | |
|---|---|---|---|
| PCH-3 | 7,00 | Klärpunkt | +60°C |
| PCH-7F | 2,00 | Δn | 0,0798 |
| CCP-2F.F.F | 16,00 | Δε | +12,6 |
| CCP-3F.F.F | 10,00 | ε_{⊥} | 5,6 |
| CCP-5F.F.F | 9,00 | Eₗ | 18,2 |
| CCP-2OCF₃ | 16,00 | Rotationsviskosität (20 °C) | 97mPa·S |
| CCP-30CF₃ | 15,00 | V₁₀ | 0.77 V |
| CCP-40CF₃ | 5,00 | Spez. Widerstand | 4,9· 10¹⁰Ω· cm |
| PDX-2N.F | 5,00 | K₁ | 6,6·10⁻¹² N |
| PDX-3N.F | 5,00 | K₃ | 14,7·10⁻¹² N |
| PDX-5N.F | 4,00 | | |
| PDX-3 | 6,00 | | |

### Beispiel 9

Eine IPS-Anzeige enthält eine nematische Mischung mit

| | | | |
|---|---|---|---|
| PCH-3 | 11,00 | Klärpunkt | +83 °C |
| CCP-2F.F.F | 16,00 | Δn | 0,0809 |
| CCP-3F.F.F | 10,00 | Δε | +10,3 |
| CCP-5F.F.F | 7,00 | ε_{⊥} | +4,0 |
| CCP-20CF₃ | 16,00 | Rotationsviskosität (20 °C) | 105 mPa·S |
| CCP-30CF₃ | 15,00 | V₁₀ | 1,05V |
| CCP-SOCF₃ | 11,00 | Spez. Widerstand | 3,4·10¹¹ Ω·cm |
| PDX-2N.F | 5,00 | | |
| CCH-34 | 6,00 | | |

und weist einen hohen Kontrast und niedrige Schaltzeiten auf.

### Biespiel 10

Eine IPS-Anzeige enthält eine nematische Mischung mit

| | | | |
|---|---|---|---|
| PCH-3 | 6,00 | Klärpunkt | +68°C |
| CCP-20CF2.F.F | 12,00 | Δn | 0,0789 |
| CCP-2F.F.F | 17,0 | Δε | 12,7 |
| CCP-3F.F.F | 14,00 | ε_{⊥} | 5,1 |
| CCP-20CF₃ | 15,00 | V₁₀ | 0,81 V |
| CCP-30CF₃ | 13,00 | K₁ | 7,4· 10⁻¹² N |
| DU-3-N | 5,00 | K₃ | 15,6±10⁻¹²N |
| DU-5-N | 5,00 | | |

und weist einen hohen Kontrast und niedrige Schaltzeiten auf.

### Beispiel 11

Eine IPS-Anzeige enthält eine nematische Mischung mit

| | | | |
|---|---|---|---|
| CCP-2F.F.F | 16,00 | Klärpunkt | +60°C |
| CCP-3F.F.F | 14,00 | Δn | 0,0756 |
| CCP-5F.F.F | 11,00 | Δε | +13,7 |
| CCP-2OCF₃ | 17,00 | ε_{⊥} | +6,1 |
| CCP-30CF₃ | 14,00 | Rotationsviskosität (20 °C) | 109 mPa·s |
| PDX-2N.F | 3,00 | V₁₀ | 0,70 V |
| PDX-3N.F | 6,00 | K₁ | 6,0·10⁻¹² N |
| PDX-5N.F | 11,00 | K₃ | 14,5·10⁻¹² N |
| CDU-3-F | 8,00 | | |

und weist einen hohen Kontrast und niedrige Schaltzeiten auf.

### Beispiel 12

Eine IPS-Anzeige enthält eine nematische Mischung mit

| | | | |
|---|---|---|---|
| PCH-3 | 7,00 | Klärpunkt | +71 °C |
| CCP-2F.F.F | 16,00 | Δn | 0,0777 |
| CCP-3F.F.F | 7,00 | Δε | +10,6 |
| CCP-5F.F.F | 9,00 | ε_{⊥} | 4,7 |
| CCP-20CF₃ | 16,00 | Rotationsviskosität (20 °C) | 88 mPa·s |
| CCP-30CF₃ | 15,00 | V₁₀ | 0,94 V |
| CCP-SOCF₃ | 4,00 | K₁ | 8,5· 10⁻¹² N |
| PDX-2N.F | 5,00 | K₃ | 15,2·10⁻¹² N |
| PDX-3N.F | 5,00 | | |
| PDX-5N.F | 3,00 | | |
| CCH-34 | 8,00 | | |
| CCH-35 | 5,00 | | |

und weist einen hohen Kontrast und niedrige Schaltzeiten auf.

### Beispiel 13

Eine IPS-Anzeige enthält eine nematiche Mischung mit

| | | | |
|---|---|---|---|
| CCP-2F.F.F | 16,00 | Klärpunkt | +76 °C |
| CCP-3F.F.F | 13,00 | Δε | +9,0 |
| CCP-5F.F.F | 9,00 | ε_{⊥} | +3,9 |
| CCP-20CF₃ | 16,00 | Δn | 0,0768 |
| CCP-3OCF₃ | 15,00 | V₁₀ | 1,16 V |
| CCP-SOCF₃ | 5,00 | Rotationsviskosität (20 °C) | 93 mPa·s |
| PDX-3 | 11,00 | Spez. Widerstand | 2,3·10¹²_{Ω·c}m |
| CCH-34 | 10,00 | | |
| PCH-7F | 5,00 | | |

### Beispiel 14

Eine IPS-Anzeige enthält eine nematische Mischung mit

| | |
|---|---|
| Klärpunkt | +68 °C |
| Δn | 0,0776 |
| nₒ | 1,4725 |
| Δε | +10,6 |
| ε_{⊥} | 5,1 |
| Rotationsviskosität (20 °C) | 82 mPa.s |
| K₁ [10⁻¹²N] (20°C) | 9,8 |
| K₃ [10⁻¹²N] (20°C) | 12,1 |
| Spez. Widerstand | 6,7 10¹¹ Ω cm |

bestehend aus

| | |
|---|---|
| PCH-3 | 8,00 |
| CCP-2F.F.F | 13,00 |
| CCP-3F.F.F | 7,00 |
| CCP-5F.F.F | 9,00 |
| CCP-2OCF₃ | 16,00 |
| CCP-30CF₃ | 15,00 |
| CCP-SOCF₃ | 5,00 |
| PCH-2N.F.F | 6,00 |
| PCH-3N.F.F | 8,00 |
| CCH-34 | 8,00 |
| CCH-35 | 5,00 |

und weist einen hohen Kontrast und niedrige Schaltzeiten auf.

### Beispiel 15

Eine IPS-Anzeige enthält eine nematische Mischung mit

| | |
|---|---|
| Klärpunkt | +76 °C |
| Δn | 0,0776 |
| nₒ | 1,4725 |
| Δε | +10,8 |
| ε_{⊥} | 4,4 |
| K₁ [10⁻¹² N] (20 °C) | 8,1 |
| K₃ [10⁻¹² N] (20 °C) | 12,9 |

bestehend aus

| | |
|---|---|
| PCH-3 | 5,00 |
| CCP-2F.F.F | 13,00 |
| CCP-3F.F.F | 9,00 |
| CCP-5F.F.F | 9,00 |
| CCP-20CF₃ | 15,00 |
| CCP-30CF₃ | 14,00 |
| CCP-50CF₃ | 5,00 |
| D-3N.F.F | 12,00 |
| D-5N.F | 5,00 |
| CCH-34 | 8,00 |
| CCH-35 | 5,00 |

und weist einen hohen Kontrast und niedrige Schaltzeiten auf.

Die IPS-Anzeigen der Beispiele 1 bis 32 zeichnen sich durch eine geringe Ansteuerspannung aus und führen in Zellen nach Embodient 1 der EP 0 58 568 zu guten "Voltage Holding Ratio" Werten.

### Vergleichsbeispiel

Eine IPS-Anzeige enthält eine nematische Mischung mit

| | |
|---|---|
| Klärpunkt | 64 °C |
| Δn | 0,0813 |
| Δε | +12,0 |

bestehend aus

| | |
|---|---|
| ME2N.F | 4,00 |
| ME3N.F | 4,00 |
| ME5N.F | 10,00 |
| ME7N.F | 6,00 |
| CCH-2 | 12,00 |
| CCH-3 | 12,00 |
| CCH-4 | 12,00 |
| CCP-30CF3 | 6,00 |
| CCP-50CF3 | 6,00 |
| CH-33 | 3,00 |
| CH-35 | 3,00 |
| CCH-34 | 10,00 |
| CCH-35 | 4,00 |
| CCH-303 | 4,00 |
| CCH-501 | 4,00 |

und weist einen geringeren Kontrast und eine höhere Schaltzeit als die Anzeigen der Beispiele 1 bis 32 auf.

## Patentansprüche

1. Elektrooptische Flüssigkristallanzeige
- mit einer Umorientierungsschicht zur Umorientierung der Flüssigkristalle, deren Feld eine signifikante Komponente parallel zur Flüssigkristallschicht aufweist,
- enthaltend ein flüssigkristallines Medium mit positiver dielektrischer Anisotropie, dadurch gekennzeichnet, daß das Medium
(a) mindestens eine mesogene Verbindung enthält, welche eine 3,4,5-Trifluorphenylgruppe aufweist,
und
(b) mindestens eine mesogene Verbindung enthält, welche ein Strukturelement der Formel 2 aufweist, 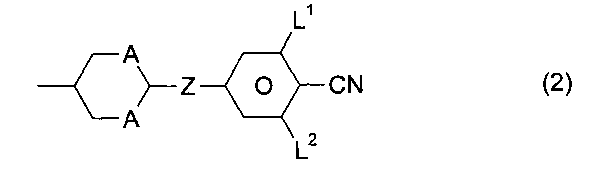 worin
A O oder CH,
Z -COO- oder eine Einfachbindung,
L¹ F oder, falls A O ist, auch H, und
L² H oder F bedeuten.

2. Flüssigkristallanzeige nach Anspruch 1, dadurch gekennzeichnet, daß das Medium mindestens eine Verbindung der Formel I enthält; 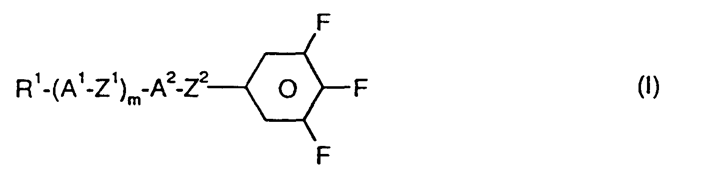 worin
R¹ H, einen unsubstituierten, einen einfach durch CN oder CF₃ oder einen mindestens einfach durch Halogen substituierten Alkyl- oder Alkenylrest mit 1 bis 15 C-Atomen, wobei in diesen Resten auch eine oder mehrere CH₂-Gruppen jeweils unabhängig voneinander durch -O-, -S-, 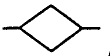 -CO-, -CO-O-, -O-CO- oder -O-CO-O- so ersetzt sein können, daß O-Atome nicht direkt miteinander verknüpft sind,
A¹ und A² jeweils unabhängig voneinander einen
(a) 1,4-Cyclohexenylen oder trans-1,4-Cyclohexylenrest, worin auch eine oder mehrere nicht benachbarte CH₂-Gruppen durch -O- und/oder -S-ersetzt sein können,
(b) 1,4-Phenylenrest, worin auch eine oder zwei CH-Gruppen durch N ersetzt sein können,
(c) Rest aus der Gruppe 1,4-Bicyclo(2,2,2)-octylen, Piperidin-1,4-diyl, Naphthalin-2,6-diyl, Decahydronaphthalin-2,6-diyl und 1,2,3,4-Tetrahydronaphthalin-2,6-diyl,
wobei die Reste (a) und (b) durch ein oder zwei Fluor substituiert sein können,
Z¹ und Z² jeweils unabhängig voneinander -CO-O-, -O-CO-, -CH₂O-, -OCH₂-, -CH₂CH₂-, -CH=CH-, -C≡C- oder eine Einfachbindung, einer der Reste Z¹ und Z² auch -(CH₂)₄- oder -CH=CH-CH₂CH₂-, und
m 0, 1 oder 2
bedeutet.

3. Flüssigkristallanzeige nach einem der Ansprüche 1 oder 2, dadurch gekennzeichnet, daß das Medium mindestens eine Verbindung enthält, welche eine Gruppe der Formel 3 aufweist: 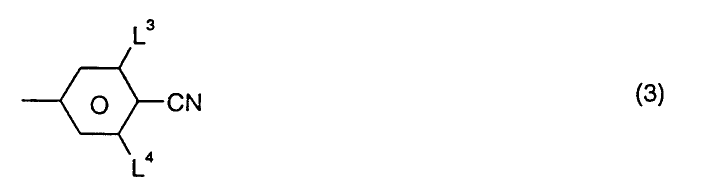 worin
L³ und L⁴ jeweils H oder F
bedeuten.

4. Flüssigkristallanzeige nach einem der Ansprüche 1 bis 3, dadurch gekennzeichnet, daß das Medium mindestens eine Verbindung der Formel II enthält 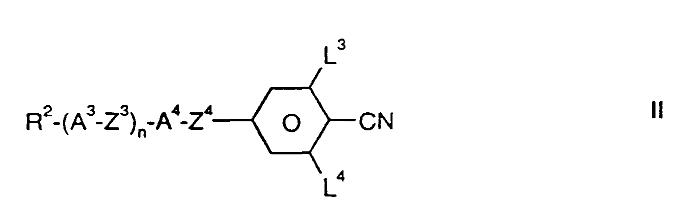 worin
L³ und L⁴ die angegebene Bedeutung aufweisen,
R² die für R¹ angegebene Bedeutung aufweist,
A³ und A⁴ jeweils unabhängig die für A¹ und A² angegebene Bedeutung besitzen,
Z³ und Z⁴ jeweils unabhängig voneinander die für Z¹ und Z² angegebene Bedeutung aufweisen, und
n 0, 1 oder 2 ist.

5. Flüssigkristallanzeige nach Anspruch 4, dadurch gekennzeichnet, daß das Medium mindestens eine Verbindung der Formel II enthält, worin R² A³, A⁴, Z³, Z⁴ und n die angegebene Bedeutung besitzen,
L³ F, und
L⁴ H oder F bedeuten.

6. Flüssigkristallanzeige nach einem der vorangehenden Ansprüche, dadurch gekennzeichnet, daß das Medium mindestens eine Verbindung, ausgewählt aus den Formeln lla bis llc, enthält 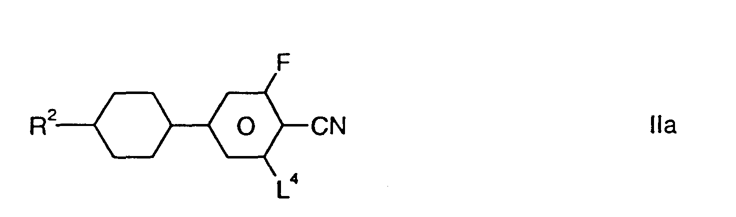 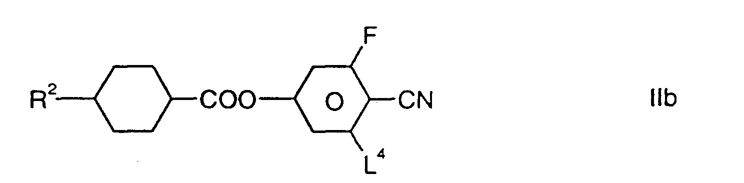 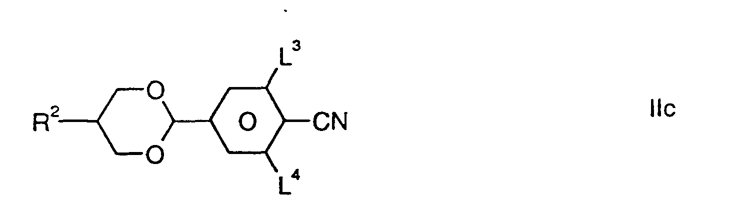 worin jeweils R², L³ und L⁴ die angegebene Bedeutung besitzen.

7. Flüssigkristallanzeige nach einem der Ansprüche 1 bis 4, dadurch gekennzeichnet, daß das Medium eine dielektrische Anisotropie Δε > 8,5 aufweist.

8. Flüssigkristallanzeige nach einem der Ansprüche 3 bis 7, dadurch gekennzeichnet, daß das Medium mindestens eine Verbindung der Formel III enthält,
R³-(A⁵-Z⁵)ₒ-A⁶-R⁴ III
worin
R³ und R⁴ jeweils unabhängig voneinander die für R¹ angegebene Bedeutung besitzen,
A⁵ und A⁶ jeweils unabhängig die für A¹ und A² angegebene Bedeutung besitzen,
Z⁵ jeweils unabhängig voneinander die für Z¹ und Z² angegebene Bedeutung aufweist, und
O 1, 2 oder 3 ist.

9. Flüssigkristallanzeige nach einem der Ansprüche 3 bis 8, dadurch gekennzeichnet, daß das Medium mindestens eine Verbindung der Formel IV enthält 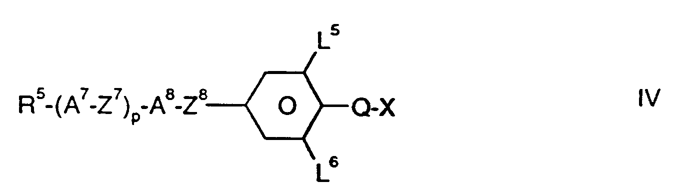 worin
R⁵ die für R¹ angegebene Bedeutung aufweist,
A⁷ und A⁸ jeweils unabhängig voneinander die für A¹ und A² angegebene Bedeutung besitzen,
Z⁷ und Z⁸ jeweils unabhängig voneinander die für Z¹ und Z² angegebene Bedeutung besitzen,
L⁵ und L⁶ jeweils unabhängig voneinander H oder F,
Q einen Polyfluoralkylenrest der Formel
-(O)_{q}-(CH₂)ᵣ-(CF₂)ₛ-
worin
q 0 oder 1 ist
r 0, oder eine ganze Zahl zwischen 1 und 6 ist und
s eine ganze Zahl zwischen 1 und 6 ist,
X H, F oder Cl, und
p 0, 1 oder 2 bedeuten.

10. Anzeige nach einem der Ansprüche 1 bis 9, dadurch gekennzeichnet, daß die Bildelemente mittels Aktivmatrix angesteuert werden.

11. Flüssigkristallines Medium mit positiver dielektrischer Anisotropie, welches eine Zusammensetzung gemäß der Ansprüche 3 bis 10 aufweist.

12. Flüssigkristallines Medium nach Anspruch 11, dadurch gekennzeichnet, daß es
- 10 bis 60, vorzugsweise 15 bis 40 Gew.% mindestens einer Verbindung der Formel I,
- 15 bis 40, vorzugsweise 20 bis 35 Gew.% mindestens einer Verbindung der Formel II,
- 20 bis 55, vorzugsweise 25 bis 50 Gew.% mindestens einer Verbindung der Formel III, und
- 0 bis 30, vorzugsweise 20 bis 25 Gew.% mindestens einer Verbindung der Formel IV,
enthält.

13. Flüssigkristallines Medium nach Anspruch 9 oder 12, dadurch gekennzeichnet, daß es:
- mindestens eine Verbindung ausgewählt aus den Formeln la und Ib enthält 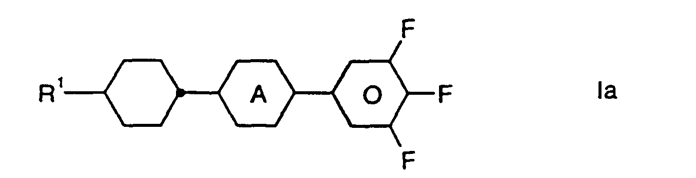 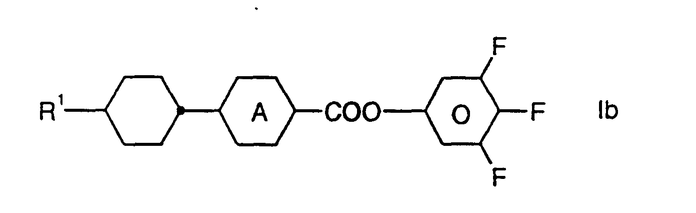
- mindestens eine Verbindung, ausgewählt aus den Formeln II1, II2, II3 und II4 enthält, 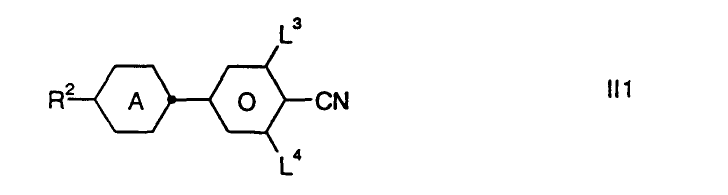 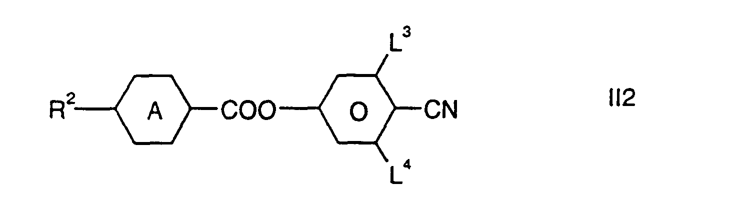 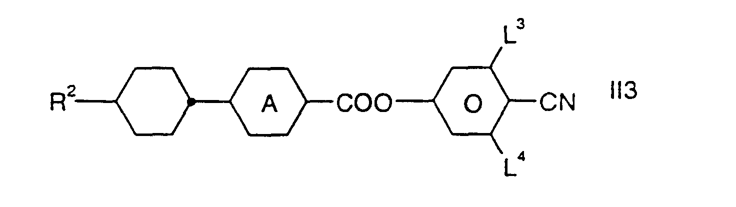 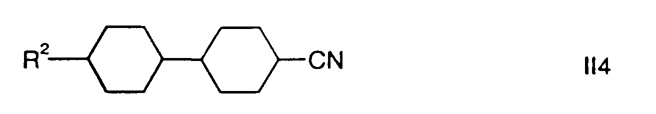
- mindestens eine Verbindung ausgewählt aus den Formeln IIIa, IIIb und IIIc enthält, 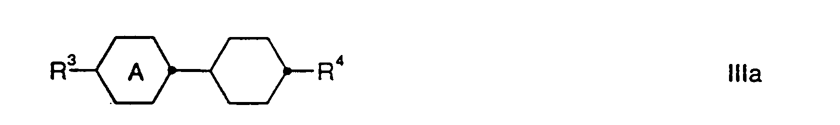 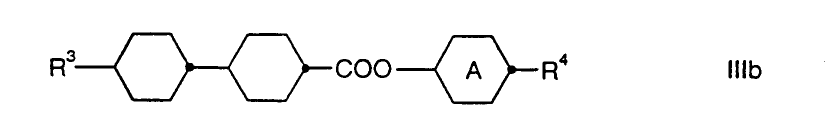 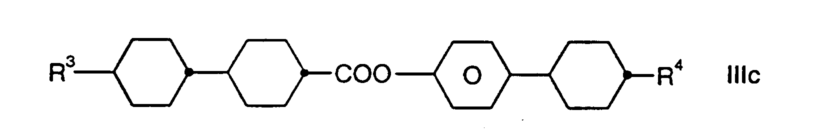 sowie
- gegebenenfalls mindestens eine Verbindung ausgewählt aus den Formeln IVa und IVb enthält, 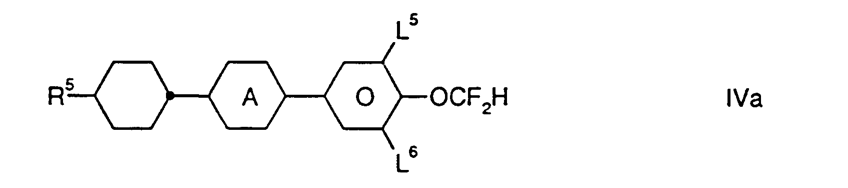 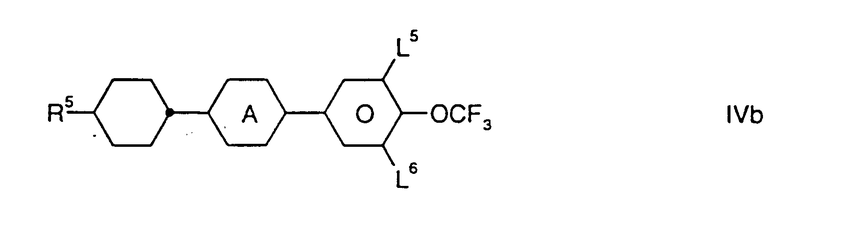 worin 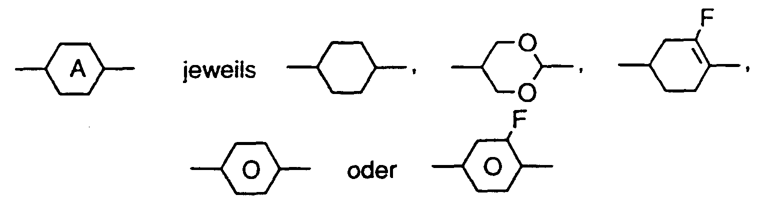 bedeutet, und R¹, R², R³, R⁴, R⁵, L¹, L², L³, L⁴, L⁵ und L⁶ die jeweils angegebene Bedeutung besitzen.

## Claims

1. Electro-optical liquid-crystal display
- having a realignment layer for realigning the liquid crystals whose field has a significant component parallel to the liquid-crystal layer,
- comprising a liquid-crystalline medium of positive dielectric anisotropy, characterized in that the medium
(a) comprises at least one mesogenic compound containing a 3,4,5-trifluorophenyl group
and
(b) comprises at least one mesogenic compound having a structural unit of the formula 2 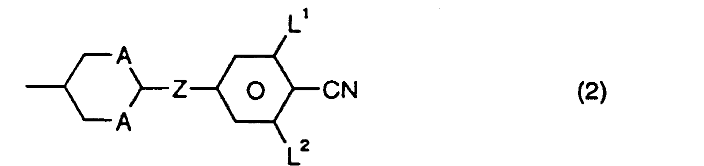 in which
A is O or CH,
Z is -COO- or a single bond,
L¹ is F or, if A is 0, is alternatively H,
and
L² is H or F.

2. Liquid-crystal display according to Claim 1, characterized in that the medium comprises at least one compound of the formula I; 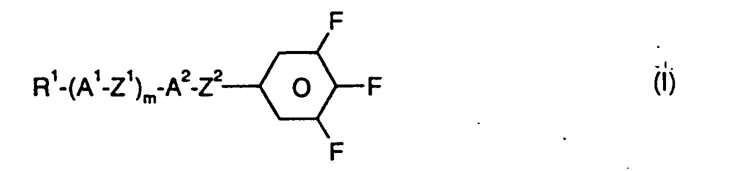 in which
R¹ is H, an alkyl or alkenyl radical having 1 to 15 carbon atoms which is unsubstituted, monosubstitued by CN or CF₃ or at least monosubstituted by halogen, where one or more CH₂ groups in these radicals may also, in each case independently of one another, be replaced by -O-, -S-, 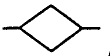 , -CO-, -CO-O-, -O-CO- or -O-CO-O- in such a way that O atoms are not linked directly to one another,
A¹ and A² are each, independently of one another, a
a) trans-1,4-cyclohexylene radical or 1,4-cyclohexenylene radical, in which, in addition, one or more non-adjacent CH₂ groups may be replaced by -O- and/or -S-,
b) 1,4-phenylene radical, in which, in addition, one or two CH groups may be replaced by N,
c) radical from the group consisting of 1,4-bicyclo[2.2.2]octylene, piperidine-1,4-diyl, naphthalene-2,6-diyl, decahydro-naphthalene-2,6-diyl and 1,2,3,4-tetrahydronaphthalene-2,6-diyl,
where the radicals (a) and (b) may be substituted by one or two fluorine atoms,
Z¹ and Z² are each, independently of one another, -CO-O-, -O-CO-, -CH₂O-, -OCH₂-, -CH₂CH₂-, -CH=CH-, -C≡C-, or a single bond, or one of the radicals Z¹ and Z² is -(CH₂)₄- or -CH=CH-CH₂CH₂-, and
m is 0, 1 or 2.

3. Liquid-crystal display according to one of Claims 1 or 2, characterized in that the medium comprises at least one compound containing a group of the formula 3: 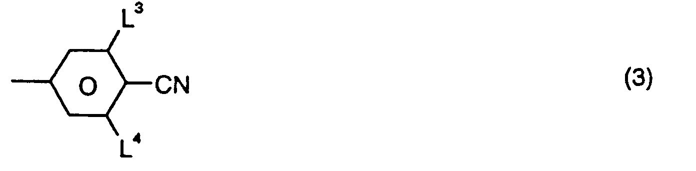 in which
L³ and L⁴ are each H or F.

4. Liquid-crystal display according to one of Claims 1 to 3, characterized in that the medium comprises at least one compound of the formula II 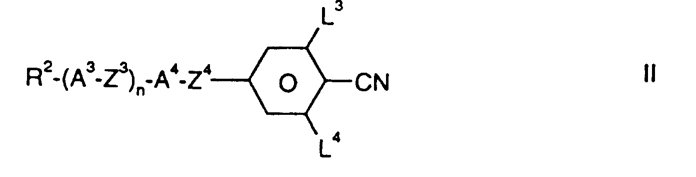 in which
L³ and L⁴ are as defined above,
R² is as defined for R¹, and
A³ and A⁴ are each, independently, as defined for A¹ and A²,
Z³ and Z⁴ are each, independently of one another, as defined for Z¹ and Z², and
n is 0, 1 or 2.

5. Liquid-crystal display according to Claim 4, characterized in that the medium comprises at least one compound of the formula II in which R² A³, A⁴, Z³, Z⁴ and n are as defined above,
L³ is F, and
L⁴ is H or F.

6. Liquid-crystal display according to one of the preceding claims, characterized in that the medium comprises at least one compound selected from the formulae IIa to IIc 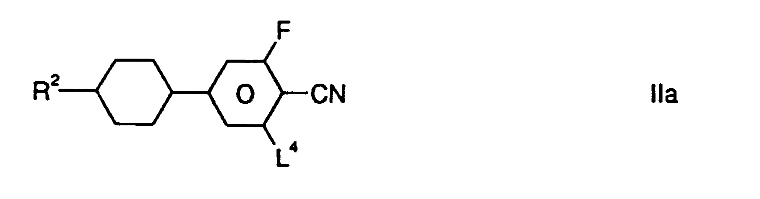 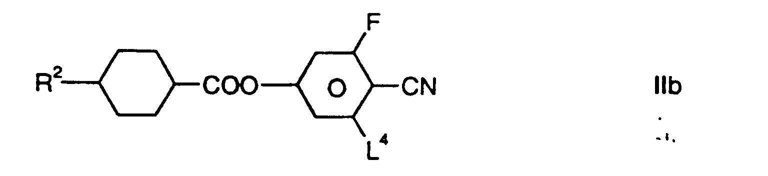 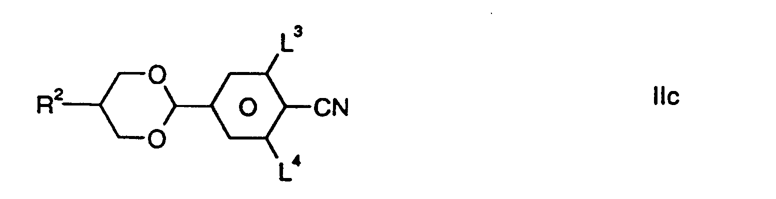 in which R², L³ and L⁴ are in each case as defined above.

7. Liquid-crystal display according to one of Claims 1 to 4, characterized in that the medium has a dielectric anisotropy Δε of > 8.5.

8. Liquid-crystal display according to one of Claims 3 to 7, characterized in that the medium comprises at least one compound of the formula III
R³-(A⁵-Z⁵)ₒ-A⁶-R⁴ III
in which
R³ and R⁴ are each, independently of one another, as defined for R¹,
A⁵ and A⁶ are each, independently of one another, as defined for A¹ and A²,
Z⁵ is in each case, independently of the others, as defined for Z¹ and Z², and
O is 1, 2 or 3.

9. Liquid-crystal display according to one of Claims 3 to 8, characterized in that the medium comprises at least one compound of the formula IV 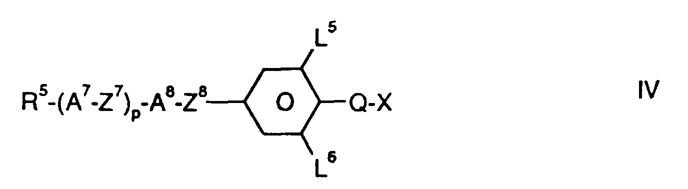 in which
R⁵ is as defined for R¹,
A⁷ and A⁸ are each, independently of one another, as defined for A¹ and A²,
Z⁷ and Z⁸ are each, independently of one another, as defined for Z¹ and Z²,
L⁵ and L⁶ are each, independently of one another, H or F,
Q is a polyfluoroalkylene radical of the formula
-(O)_{q}-(CH₂)ᵣ-(CF₂)ₛ-
in which
q is 0 or 1
r is 0 or an integer between 1 and 6 and
s is an integer between 1 and 6,
X is H, F or Cl, and
p is 0, 1 or 2.

10. Display according to one of Claims 1 to 9, characterized in that the pixels are addressed by means of an active matrix.

11. Liquid-crystalline medium of positive dielectric anisotropy which has a composition according to Claims 3 to 10.

12. Liquid-crystalline medium according to Claim 11, characterized in that it comprises
- from 10 to 60 % by weight, preferably from 15 to 40% by weight, of at least one compound of the formula I,
- from 15 to 40% by weight, preferably from 20 to 35% by weight, of at least one compound of the formula II,
- from 20 to 55% by weight, preferably from 25 to 50% by weight, of at least one compound of the formula (III), and
- from 0 to 30% by weight, preferably from 20 to 25% by weight, of a compound of the formula IV.

13. Liquid-crystalline medium according to Claim 9 or 12, characterized in that it comprises:
- at least one compound selected from the formulae Ia and 1b 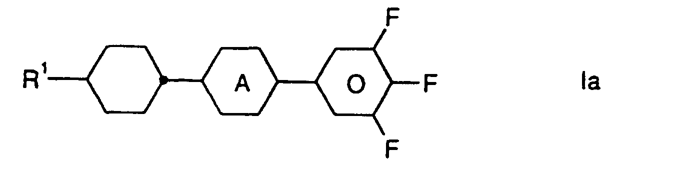 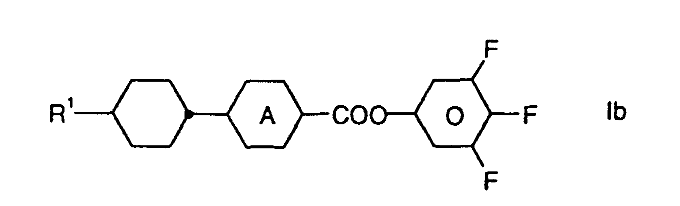
- at least one compound selected from the formulae II1, II2, II3 and II4, 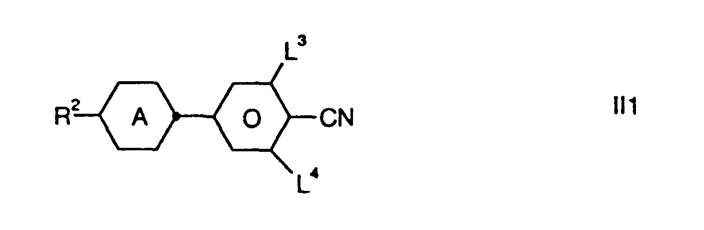 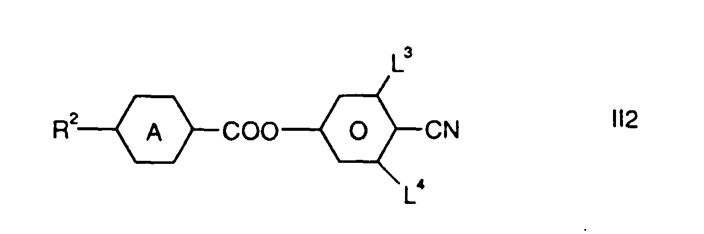 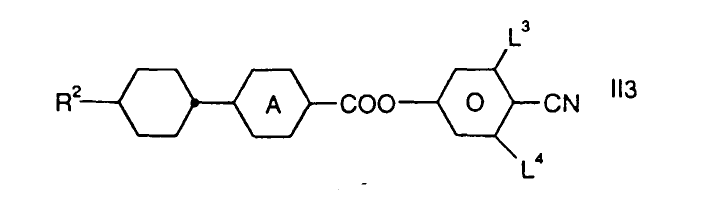 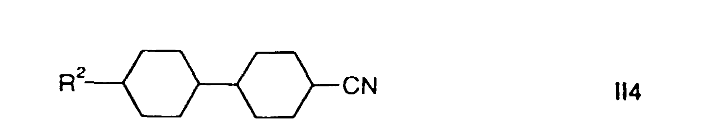
- at least one compound selected from the formulae IIIa, IIIb, and IIIc, 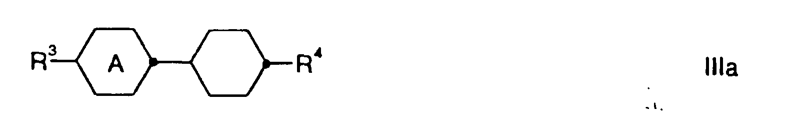 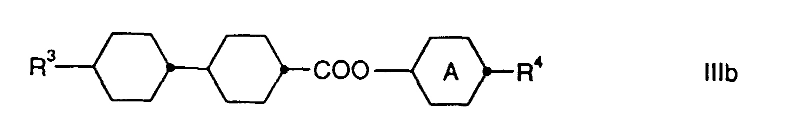 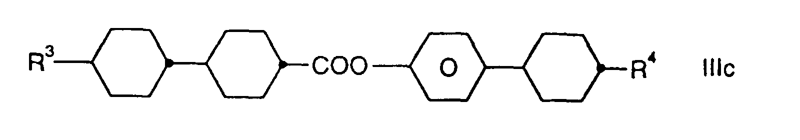 and
- if desired, at least one compound selected from the formulae IVa and IVb, 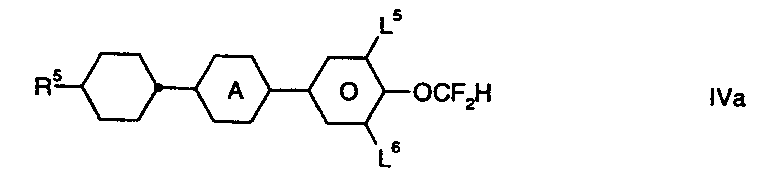 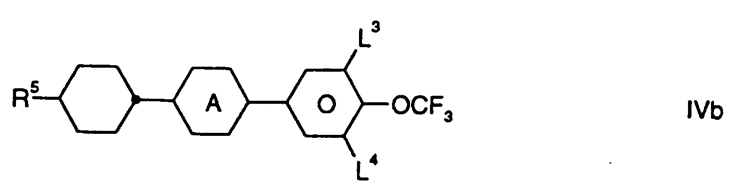 in which 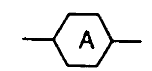 is in each case or 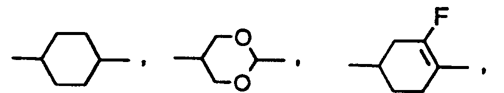 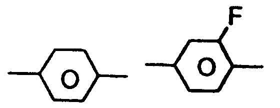 and R¹, R², R³, R⁴, R⁵, L¹, L², L³, L⁴, L⁵ and L⁶ are each as defined above.

## Revendications

1. Affichage à cristaux liquides électro-optique
- ayant une couche de réorientation pour réorienter les cristaux liquides, dont le champ présente un composant significatif parallèle à la couche de cristaux liquides,
- contenant un milieu à cristaux liquides à anisotropie diélectrique positive, caractérisé en ce que le milieu
- (a) contient au moins un composé mésogène qui présente un groupe 3,4,5-trifluorophényle,
et
- (b) contient au moins un groupe mésogène qui présente un élément de structure de formule 2, 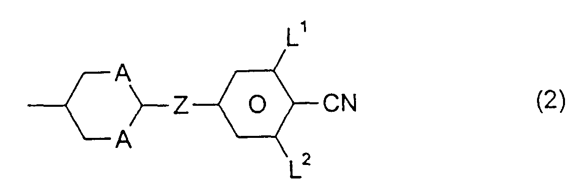
dans laquelle
A représente O ou CH,
Z représente -COO- ou une liaison simple, L¹ représente F ou encore, si A représente O, H, et
L² représente H ou F.

2. Affichage à cristaux liquides selon la revendication 1, caractérisé en ce que le milieu contient au moins un composé de formule I 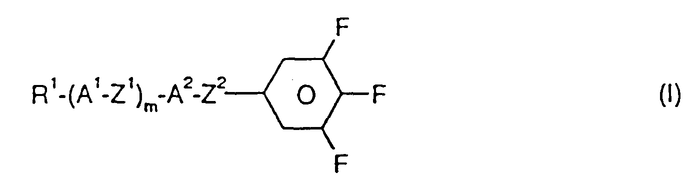 dans laquelle
R¹ représente H, un radical alkyle ou alcényle comportant de 1 à 15 atomes de carbone, non substitué, monosubstiuté par CN ou CF₃ ou au moins monosubstitué par un halogène, et dans ses radicaux un ou plusieurs groupes CH₂ peuvent toujours être remplacés indépendamment l'un de l'autre par -O-, -S-, 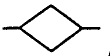 -CO-, -CO-O, -O-CO- ou -O-CO-O-, de manière que les atomes d'oxygène ne soient pas directement reliés entre eux,
A¹ et A² représentent chacun indépendamment l'un de l'autre
(a) un 1,4-cyclohexénylène ou un radical trans-1,4-cyclohexylène ou encore un ou plusieurs groupes CH₂ non voisins peuvent être remplacés par -O- et/ou -S-,
(b) un radical 1,4-phénylène, où encore un ou deux groupes CH2 peuvent être remplacés par N,
(c) un radical du groupe 1,4-bicyclo(2,2,2)-octylène, pipéridine-1,4-diyle, naphtalène -2,6-diyle, décahydronaphtalène, 2,6-diyle et 1,2,3,4- tétrahydronaphtalène-2,6-diyle,
où les radicaux A et B peuvent être substitués par un ou deux atomes de fluor,
Z¹ et Z² représentent chacun indépendamment l'un de l'autre -CO-O-, -O-CO-, -CH₂O-, -OCH₂-, -CH₂CH₂-, CH=CH-, C=C, ou une liaison simple, ou l'un des radicaux Z¹ et Z² représente également -(CH₂)₄ ou -CH=-CH-CH₂CH₂- et m vaut 0, 1 ou 2.

3. Affichage à cristaux liquides selon l'une des revendications 1 ou 2, caractérisé en ce que le milieu contient au moins un composé qui présente un groupe de formule 3 : 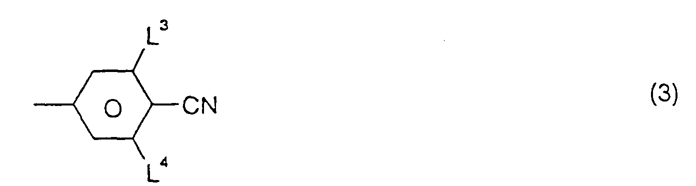 dans laquelle
L³ et L⁴ représentent chacun H ou F.

4. Affichage à cristaux liquides selon l'une des revendications 1 à 3,
caractérisé en ce que le milieu contient au moins un composé de formule II 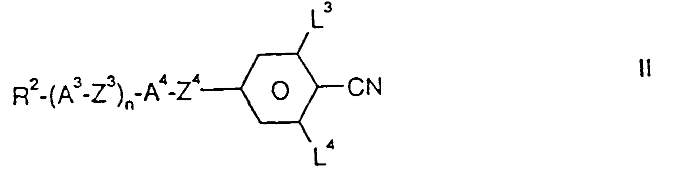 dans laquelle
L³ et L⁴ ont la signification indiquée,
R² a la signification indiquée pour R¹,
A³ et A⁴ possèdent à chaque fois indépendamment l'un de l'autre la signification indiquée pour A¹ et A²,
Z³ et Z⁴ représentent ont chacun indépendamment l'un de l'autre la signification donnée pour Z¹ et Z², et
n vaut 0, 1 ou 2.

5. Affichage à cristaux liquides selon la revendication 4, caractérisé en ce que le milieu contient au moins un composé de formule II dans lequel R², A³, A⁴, Z³, Z⁴ et n ont la signification indiquée,
L³ représente F et
L⁴ représente H ou F.

6. Affichage à cristaux liquides selon l'une des revendications précédentes, caractérisé en ce que le milieu contient au moins un composé choisi parmi les formules IIa à IIc 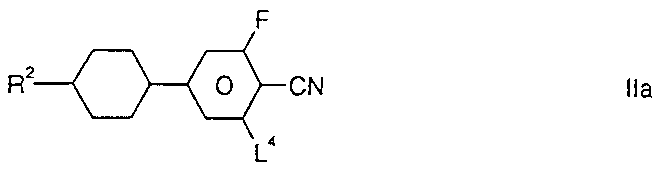 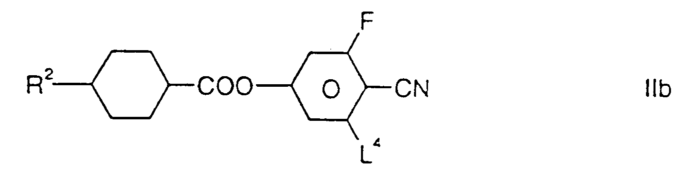 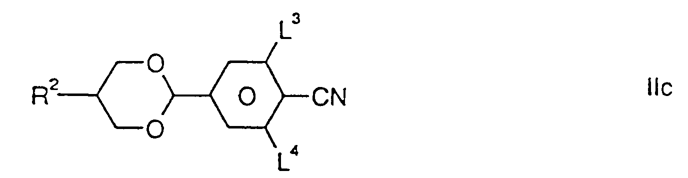 dans lesquelles à chaque fois R², R³ et R⁴ ont la signification indiquée.

7. Affichage de cristaux liquides selon l'une des revendications 1 à 4, caractérisé en ce que le milieu présente une anisotropie diélectrique Δε supérieure à 8,5.

8. Affichage à cristaux liquides selon l'une des revendications 3 à 7, caractérisé en ce que le milieu contient au moins un composé de formule III
R³-(A⁵-Z⁵)ₒ-A⁶⁻R⁴ III
dans laquelle
R³ et R⁴ ont chacun indépendamment l'un de l'autre la signification donnée pour R¹ ;
A⁵ et A⁶ ont chacun indépendamment l'un de l'autre la signification indiquée pour A¹ et A²,
Les Z⁵ ont chacun indépendamment l'un de l'autre la signification indiquée pour Z¹ et Z², et
o vaut 1, 2 ou 3.

9. Affichage à cristaux liquides selon l'une des revendications 3 à 8, caractérisé en ce que le milieu contient au moins un composé de formule IV 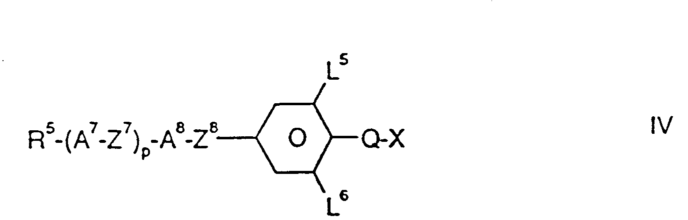 dans laquelle
R⁵ a la signification indiquée pour R¹
A⁷ et A⁸ ont chacun indépendamment l'un de l'autre la signification indiquée pour A¹ et A² et
Z⁷ et Z⁸ ont chacun indépendamment l'un de l'autre la signification indiquée pour Z¹ et Z²,
L⁵ et L⁶ représentent chacun indépendamment l'un de l'autre H ou F,
Q représente un radical polyfluoroalkylène de formule
-(O)_{q}-(CH₂)ᵣ-(CF₂)₅-
dans laquelle
q vaut 0 ou 1
r vaut 0 ou un nombre entier compris entre 1 et 6 et
s est un nombre entier compris entre 1 et 6,
X représente H, F ou Cl et
p vaut 0, 1 ou 2.

10. Affichage selon l'une des revendications 1 à 9, caractérisé en ce que les éléments d'images sont dirigés au moyen d'une matrice active.

11. Milieu à cristaux liquides à anisotropie diélectrique positive qui présente une composition selon les revendications 3 à 10.

12. Milieu à cristaux liquides selon la revendication 11, caractérisé en ce qu'il contient,
- de 10 à 60, de préférence de 15 à 40 % en poids d'un composé de formule I,
- de 15 à 40, de préférence de 20 à 35% en poids, d'au moins un composé de formule II,
- de 20 à 55, de préférence de 25 à 50 % en poids, d'au moins un composé de formule III et
- de 0 à 30, de préférence de 20 à 25 % en poids, d'au moins un composé de formule IV.

13. Milieu à cristaux liquides selon la revendication 9 ou 12, caractérisé en ce qu'il contient :
- au moins un composé choisi parmi les formules Ia et Ib 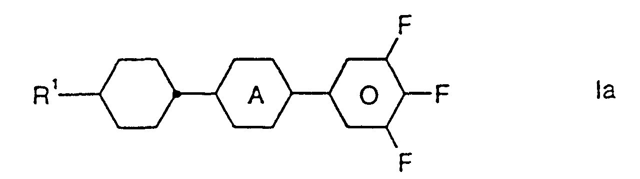 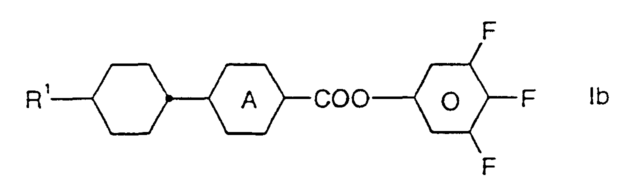
- au moins un composé choisi parmi les formules III, II2, II3 et II4, 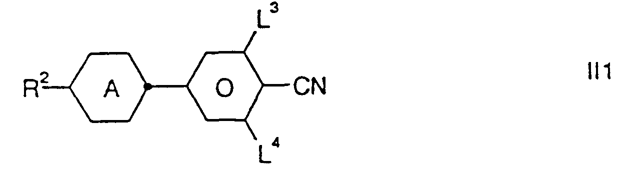 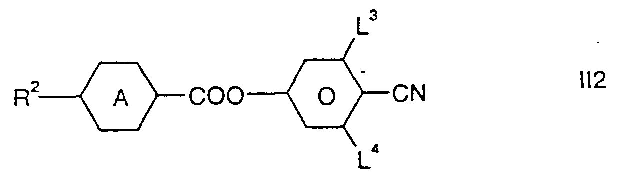 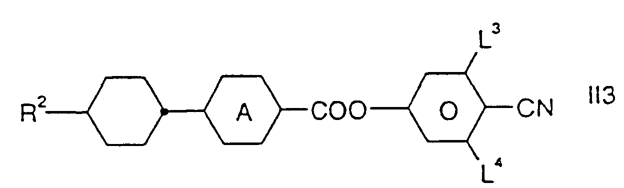 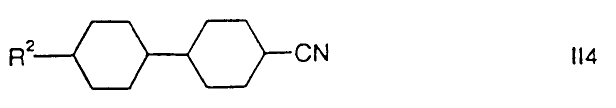
- au moins un composé choisi parmi les formules IIIa, IIIb et IIIc 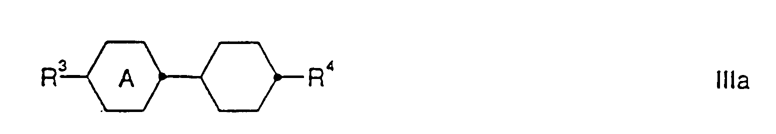 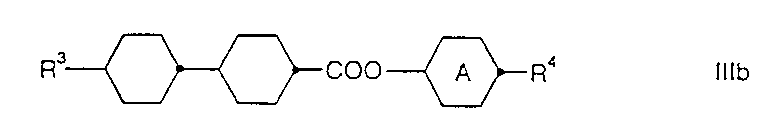 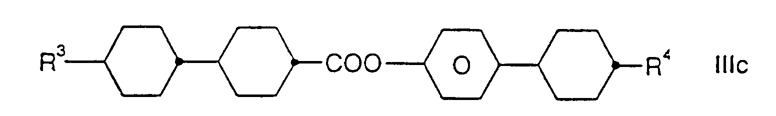 ainsi que
- le cas échéant au moins un composé choisi parmi les formules IVa et IVb, 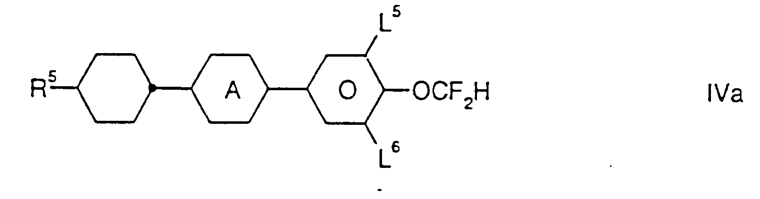 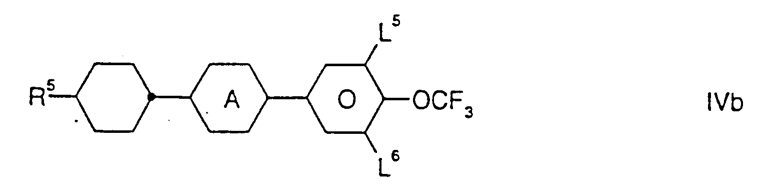 dans lesquelles 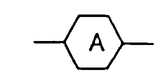 représente toujours 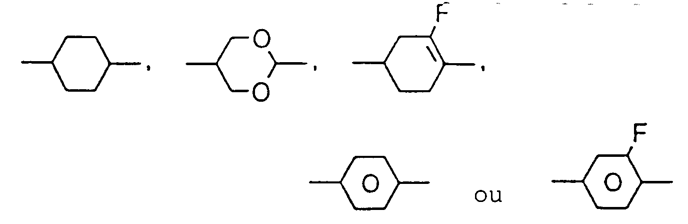 et R¹, R², R³, R⁴, R⁵, L¹, L², L³, L⁴, L⁵ et L⁶ ont la signification indiquée à chaque fois.
